# EUROPEAN PATENT SPECIFICATION

(11) **EP 2 296 334 B1**
(45) Date of publication and mention of the grant of the patent: **19.02.2014**
(21) Application number: 09793823.7
(22) Date of filing: 02.07.2009
(51) Int. Cl.: H04L 29/06

(54) **MULTI-USER SERVICE ESTABLISHING AND CONTROL CHANNEL TRANSFERRING METHOD, APPARATUS AND SYSTEM**
MEHRBENUTZER-DIENSTAUFBAU- UND STEUERKANALÜBERTRAGUNGSVERFAHREN, -VORRICHTUNG UND -SYSTEM
PROCÉDÉ, APPAREIL ET SYSTÈME D'ÉTABLISSEMENT DE SERVICE MULTI-UTILISATEUR ET DE TRANSFERT DE CANAL DE COMMANDE

(30) Priority: 08.07.2008 CN 200810133059
(43) Date of publication of application: 16.03.2011
(73) Proprietor: Huawei Technologies Co., Ltd., Longgang District, Shenzhen Guangdong 518129 (CN)
(72) Inventor: LIU, Ji, Shenzhen Guangdong 518129 (CN); DING, Chuansuo, Shenzhen Guangdong 518129 (CN); CHEN, Li, Shenzhen Guangdong 518129 (CN)
(74) Representative: Thun, Clemens
(86) International application number: PCT/CN2009/072592
(87) International publication number: WO 2010/003348

(56) References cited:
- WO-A1-2007/093127
- WO-A1-2007/096474
- WO-A2-2006/074093
- CN-A- 101 030 961
- CN-A- 101 068 199
- CN-A- 101 068 340
- ROSENBERG DYNAMICSOFT J PETERSON NEUSTAR H SCHULZRINNE COLUMBIA UNIVERSITY G CAMARILLO ERICSSON J: "Best Current Practices for Third Party Call Control (3pcc) in the Session Initiation Protocol (SIP); rfc3725.txt", 5. JCT-VC MEETING; 96. MPEG MEETING; 16-3-2011 - 23-3-2011; GENEVA;(JOINT COLLABORATIVE TEAM ON VIDEO CODING OF ISO/IEC JTC1/SC29/WG11AND ITU-T SG.16 ); URL: HTTP://WFTP3.ITU.INT/AV-ARCH/JC TVC-SITE/, INTERNET ENGINEERING TASK FORCE, IETF, CH, 1 April 2004 (2004-04-01), pages 1-31, XP015009505, ISSN: 0000-0003

## Description

### FIELD OF THE INVENTION

The present invention relates to the field of communications, and in particular, to a method, device, and system for establishing a multi-user service, and a method, device, and system for transferring a control channel.

### BACKGROUND OF THE INVENTION

The Internet Protocol Television (IPTV) is a manageable multimedia service which transports television, videos, texts, graphics, and data on an Internet Protocol (IP) network and is capable of providing Quality of Service (QoS)/User Quality of Experience (QoE), security, interactivity, and reliability. The IPTV adopts advantages of technologies such as telecommunication and Internet, and particularly a bi-direction feature based on the IP network, so that the IPTV can provide rich services.

Currently, basic services of the IPTV include live broadcast, Video On Demand, and Pause Live television, and in addition, a user can further perform value-added services such as online games, multimedia magazines and web page browsing, real-time communication, a short message, and an interactive advertisement. Furthermore, a service in which the multimedia and the communication converge is also a new development direction, such as Caller ID, Follow me, and Amigo television, which will bring brand-new experiences to a user.

A terminal and a media function (MF) unit establish the Real Time Streaming Protocol (RTSP) connection and the Real Time Transport Protocol (RTP) connection through the Session Initiation Protocol (SIP), so as to play and control multimedia content. The terminal requests the establishment of a media session to the MF, the MF responds to the request, and the terminal and a media then establish the RTSP connection and the RTP connection. The session establishing request and the response carry parameters related to the RTSP and RTP, which are used to complete establishment of the RTSP connection and the RTP connection.

WO 2007/096474 A1 provides a solution for contents to be shared between participants in group communication when the contents are located in a media server and the sharing is provided by a communication sever. In the solution, a user terminal sets a transport mechanism between the media server and the communication server for delivering the contents from the media server to the communication server so that the contents are not passing through the user terminal.

The inventors found that in the prior art a media control channel and a media transmission channel have to correspond to one terminal, so generation and development of new services are greatly limited.

### SUMMARY OF THE INVENTION

Embodiments of the present invention provide a method, device, and system for establishing a multi-user service, and a method, device, and system for transferring a control channel, so as to achieve synchronous watching and synchronous control of a multi-user service and transfer of a media control channel.

To achieve the purposes, an embodiment of the present invention provides a method for establishing a multi-user service. The method includes: returning a media control channel parameter and a media transmission channel parameter according to a received media session establishing request; receiving an associated parameter, in which the associated parameter is a parameter generated by associating the media control channel parameter of a controlling-party user unit with the media transmission channel parameter of a receiving-party user unit; establishing a media control channel with the controlling-party user unit according to a third-party call and the associated parameter; and establishing a media transmission channel with the receiving-party user unit according to a third-party call and the associated parameter.

To achieve the purposes, an embodiment of the present invention further provides a method for transferring a control channel. The method includes: receiving a media control channel transfer request; and establishing a media control channel with a precontrolling-party user unit, and releasing a media control channel established with a controlling-party user unit.

To achieve the purposes, an embodiment of the present invention further provides a method for establishing a multi-user service. The method includes: sending a media session establishing request; receiving a media control channel parameter and a media transmission channel parameter returned by an MF, and receiving a media transmission channel parameter of the receiving-party user unit; associating a media control channel parameter of a controlling-party user unit with the media transmission channel parameter of the receiving-party user unit, and sending an associated parameter to the MF; and establishing a media control channel with the MF.

To achieve the purposes, an embodiment of the present invention further provides a method for transferring a control channel. The method includes: sending a media control channel transfer request to notify transfer of the control channel; and releasing a media control channel established with the MF.

To achieve the purposes, an embodiment of the present invention further provides a device for establishing a multi-user service. The device includes: a module configured to return a media control channel parameter and a media transmission channel parameter according to a received media session establishing request; a module configured to receive an associated parameter, in which the associated parameter is a parameter generated by associating the media control channel parameter of a controlling-party user unit with the media transmission channel parameter of a receiving-party user unit; a module configured to establish a media control channel with the controlling-party user unit according to a third-party call and the associated parameter; and a module configured to establish a media transmission channel with the receiving-party user unit according to the third-party call and the associated parameter.

To achieve the purposes, an embodiment of the present invention further provides a system for establishing a multi-user service. The system includes: an MF, configured to return a media control channel parameter and a media transmission channel parameter according to a received media session establishing request, receive an associated parameter, in which the associated parameter is a parameter generated by associating the media control channel parameter of a controlling-party user unit with the media transmission channel parameter of a receiving-party user unit, establish a media control channel with the controlling-party user unit according to a third-party call and the associated parameter, and establish a media transmission channel with the receiving-party user unit according to the third-party call and the associated parameter; and a session control function unit, configured to receive a session establishing request of the controlling-party user unit, and initiate the third-party call to the MF according to the session establishing request.

To achieve the purposes, an embodiment of the present invention further provides a device for transferring a control channel. The device includes: a module configured to receive a media control channel transfer request; and a module configured to establish a media control channel with a precontrolling-party user unit and release a media control channel established with a controlling-party user unit.

To achieve the purposes, an embodiment of the present invention further provides a system for transferring a control channel. The system includes: an MF, configured to receive a media control channel transfer request, establish a media control channel with a precontrolling-party user unit, and release a media control channel established with a controlling-party user unit; and a session control function unit, configured to receive a media control channel transfer notification of the controlling-party user unit, send a media session establishing request to the precontrolling-party user unit, receive a returned media control channel parameter, and send the media control channel parameter of a precontrolling party and a session identifier of the current media control channel to the MF.

To achieve the purposes, an embodiment of the present invention further provides a device for establishing a multi-user service. The device includes: a module configured to send a media session establishing request; a module configured to receive a media control channel parameter and a media transmission channel parameter returned by an MF and receive a media transmission channel parameter of a receiving-party user unit; a module configured to associate the media control channel parameter of a controlling-party user unit with the media transmission channel parameter of the receiving-party user unit and send an associated parameter to the MF; and a module configured to establish a media control channel with the MF.

To achieve the purposes, an embodiment of the present invention further provides a device for transferring a control channel. The device includes: a module configured to send a media control channel transfer request to notify transfer of the control channel; and a module configured to release the media control channel established with the MF.

In the method for establishing the multi-user service according to the embodiment of the present invention, the session control function unit initiates the third-party call, and helps to establish media sessions among the controlling-party user unit, the receiving-party user unit, and the MF, so the controlling-party user unit controls media playing through the media control channel established with the MF, and meanwhile the receiving-party user unit receives media content through the transmission channel established with the MF. In this way, a function of multi-user synchronous control and watching is achieved. Therefore, the user experience is improved, and the functions of the multi-user service are enriched.

In the method for transferring the control channel according to the embodiment of the present invention, the session control function unit sends the media control channel transfer request, and reestablishes a media control channel, so the precontrolling-party user unit obtains a control right to play media, thus effectively achieving transfer of the media control channel and improving user experience at the time of using a service.

### BRIEF DESCRIPTION OF THE DRAWINGS

FIG. 1 is a schematic flow chart of a method for establishing a multi-user service according to an embodiment of the present invention;
FIG. 2 is a schematic flow chart of another method for establishing a multi-user service according to an embodiment of the present invention;
FIG. 3 is a schematic flow chart of a method for transferring a control channel according to an embodiment of the present invention;
FIG. 4 is a schematic flow chart of another method for transferring a control channel according to an embodiment of the present invention;
FIG. 5 is a schematic structural view of a system for establishing a multi-user service according to an embodiment of the present invention;
FIG. 6 is a schematic flow chart of a method for establishing a multi-user service according to another embodiment of the present invention;
FIG. 7 is a schematic flow chart of a further method for establishing a multi-user service according to another embodiment of the present invention;
FIG. 8 is a schematic flow chart of a method for transferring a control channel according to another embodiment of the present invention;
FIG. 9 is a schematic flow chart of another method for transferring a control channel according to another embodiment of the present invention;
FIG. 10 is a schematic flow chart of a further method for transferring a control channel according to another embodiment of the present invention;
FIG. 11 is a schematic structural view according to another embodiment of the present invention;
FIG. 12 is a schematic flow chart of a method for establishing a multi-user service according to a further embodiment of the present invention;
FIG. 13 is a schematic flow chart of a method for transferring a control channel according to a further embodiment of the present invention;
FIG. 14 is a schematic structural view of a system for establishing a multi-user service according to a further embodiment of the present invention;
FIG. 15 is a schematic structural view of a system for transferring a control channel according to a further embodiment of the present invention;
FIG. 16 is a schematic structural view of a further system for transferring a control channel according to a further embodiment of the present invention;
FIG. 17 is a schematic structural view of a device for establishing a multi-user service according to a further embodiment of the present invention;
FIG. 18 is a schematic structural view of a further device for transferring a control channel according to a further embodiment of the present invention;
FIG. 19 is a schematic structural view of another device for establishing a multi-user service according to a further embodiment of the present invention; and
FIG. 20 is a schematic structural view of another device for transferring a control channel according to a further embodiment of the present invention.

### DETAILED DESCRIPTION OF THE EMBODIMENTS

The technical solutions according to the present invention are further described in detail hereinafter with reference to the accompanying drawings and the embodiments.

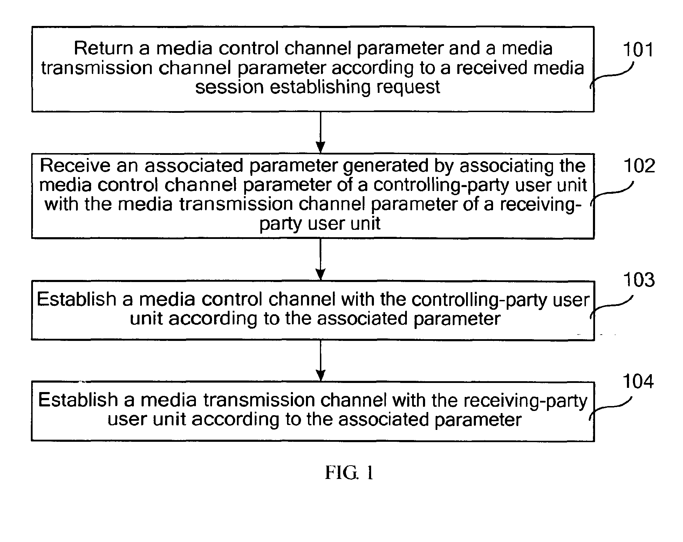

FIG. 1 is a schematic flow chart of a method for establishing a multi-user service according to an embodiment of the present invention. As shown in FIG. 1, this embodiment includes the following steps:
Step 101: Return a media control channel parameter and a media transmission channel parameter according to a received media session establishing request.
Step 102: Receive an associated parameter, in which the associated parameter is a parameter generated by associating the media control channel parameter of a controlling-party user unit with the media transmission channel parameter of a receiving-party user unit.
Step 103: Establish a media control channel with the controlling-party user unit according to the associated parameter.
Step 104: Establish a media transmission channel with the receiving-party user unit according to the associated parameter.

In the method for establishing the multi-user service according to the embodiment of the present invention, the media control channel and the media transmission channel are established between the controlling-party user unit and an MF and between the receiving-party user unit and the MF, so the controlling-party user unit controls media playing through the media control channel established with the MF, and meanwhile the receiving-party user unit receives media content through the transmission channel established with the MF. In this way, a function of multi-user synchronous control and synchronous watching is achieved. Therefore, user experience is improved, and functions of the multi-user service are enriched.

Further, on the basis of the embodiment as shown in FIG. 1, the following steps can be further included:
A session control function unit receives a session establishment notification of the controlling-party user unit.

The session control function unit sends the media session establishing request according to the session establishment notification.

Further, on the basis of the embodiment shown in FIG. 1, the following steps can be further included:
The session control function unit receives the media control channel parameter and the media transmission channel parameter returned by the MF, and sends the parameters to the controlling-party user unit and the receiving-party user unit.

The session control function unit receives the media control channel parameter of the controlling-party user unit and the media transmission channel parameter of the receiving-party user unit.

The session control function unit associates the media control channel parameter of the controlling-party user unit with the media transmission channel parameter of the receiving-party user unit and generates the associated parameter.

The session control function unit sends the associated parameter to the MF.

Further, on the basis of the embodiment as shown in FIG. 1, the following steps can be further included.

A conference function unit receives a conference establishing request of the controlling-party user unit and returns a conference identifier.

The conference function unit establishes the media transmission channel with the controlling-party user unit.

According to the conference establishing request, the conference function unit sends the media session establishing request to a service control function unit, and the service control function unit forwards the media session establishing request to the MF.

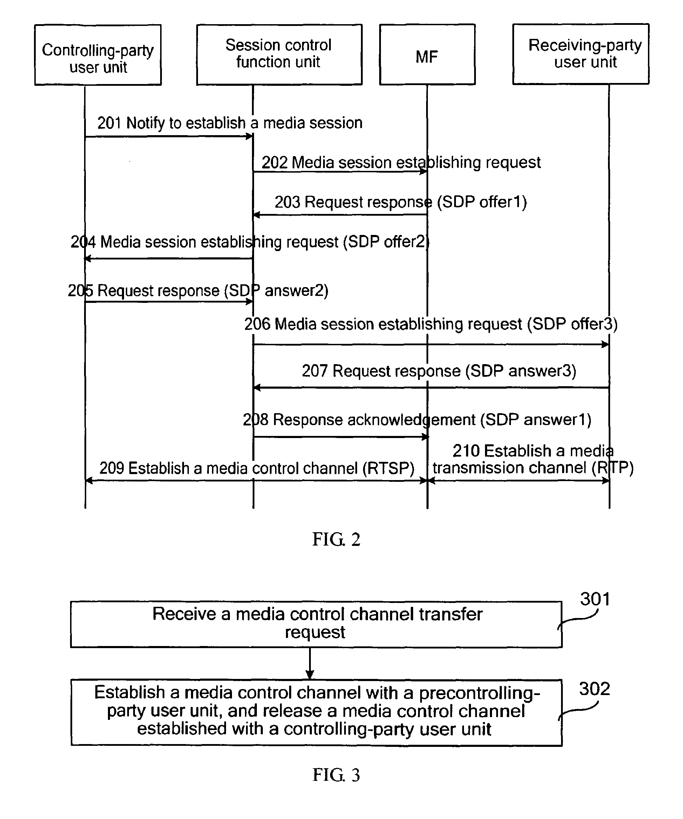

FIG. 2 is a schematic flow chart of another method for establishing a multi-user service according to an embodiment of the present invention. A controlling-party user unit, a receiving-party user unit, a session control function unit, and an MF are involved. The controlling-party user unit intends to invite one or more receiving-party user units to watch certain media content, and the controlling-party user unit intends to perform playing control, such as fast forward, fast rewind, and pause. The method includes the following steps:
Step 201: The controlling-party user unit sends a media session establishment notification to notify the session control function unit that the session control function unit needs to establish a media session. The media session establishment notification carries media information, information of the controlling-party user unit, and information of the receiving-party user unit.
Step 202: After receiving the media session establishment notification of the controlling-party user unit, the session control function unit initiates a third-party call, that is, sends a media session establishing request to the MF. The request may not carry the Session Description Protocol (SDP).
Step 203: After receiving the request, the MF returns a request response. The response includes an SDP offer1, that is, a media control channel parameter and a media transmission channel parameter of the MF, where the media control channel parameter includes a media control channel session identifier and an RTSP Uniform Resource Locator (URL).
Step 204: After receiving the request response of the MF, the session control function unit sends the media session establishing request to the controlling-party user unit. The request includes an SDP offer2, that is, the media control channel parameter of the MF and media content description information.
Step 205: After receiving the request, the controlling-party user unit sends the request response to the session control function unit. The request response includes an SDP answer2, that is, a media control channel parameter of the controlling-party user unit.
Step 206: After receiving the request response of the MF, the session control function unit initiates the third-party call according to the information of the receiving-party user unit in the media session establishment notification sent by the controlling-party user unit, that is, sends the media session establishing request to the corresponding receiving-party user unit. The request includes an SDP offer3, that is, the media transmission channel parameter of the MF, and the media content description information.
Step 207: After receiving the media session establishing request of the session control function unit, the receiving-party user unit sends the request response to the session control function unit. The request response includes an SDP answer3, that is, a media transmission channel parameter of the receiving-party user unit.
Step 208: After receiving the request response of the controlling-party user unit and the request response of the receiving-party user unit, the session control function unit associates the media control channel parameter of the controlling-party user unit with the media transmission channel parameter of the receiving-party user unit to generate an associated parameter. That is, the media control channel parameter and the media transmission channel parameter are bound with a group identifier. The session control function unit sends a response acknowledgement to the MF. The response acknowledgement includes an SDP answer1, that is, the associated parameter.
Step 209: The MF establishes an RTSP media control channel with the controlling-party user unit according to the received response acknowledgement.
Step 210: The MF establishes an RTP media transmission channel with the receiving-party user unit according to the received response acknowledgement.

In the method for establishing the multi-user service according to the embodiment, the session control function unit initiates the third-party call, and helps to establish media sessions between the controlling-party user unit and the MF and between the receiving-party user unit and the MF, so the controlling-party user unit controls media playing through the media control channel established with the MF, and meanwhile the receiving-party user unit receives media content through the transmission channel established with the MF. In this way, a function of multi-user synchronous control and synchronous watching is achieved. Therefore, user experience is improved, and functions of the multi-user service are enriched.

FIG. 3 is a schematic flow chart of a method for transferring a control channel according to an embodiment of the present invention. As shown in FIG. 3, this embodiment includes the following steps:
Step 301: Receive a media control channel transfer request.
Step 302: Establish a media control channel with a precontrolling-party user unit, and release the media control channel established with a controlling-party user unit.

In the method for transferring the control channel according to the embodiment, the media control channel is established with the precontrolling-party user unit, so that the precontrolling-party user unit obtains a control right for the media playing, thus effectively achieving transfer of the media control channel, and improving user experience at the time of using a service.

Further, on the basis of the embodiment as shown in FIG. 3, the following steps can be further included:
During the establishing the media control channel with the precontrolling-party user unit, control state information of the media control channel to be transferred is sent to the precontrolling-party user unit.

Further, on the basis of the embodiment as shown in FIG. 3, the receiving the media control channel transfer request can further include the following steps:
A session control function unit receives a media control channel transfer notification of the controlling-party user unit.

The session control function unit sends a media session establishing request to the precontrolling-party user unit, and receives a returned media control channel parameter.

The session control function unit sends the media control channel parameter of a precontrolling party and a session identifier of the current media control channel to an MF.

Further, on the basis of the embodiment as shown in FIG. 3, the establishing the media control channel with the precontrolling-party user unit, and releasing the media control channel established with the controlling-party user unit include the following steps:
A media control channel parameter and a media control channel state of the MF are sent to the session control function unit.

The session control function unit forwards the media control channel parameter and the media control channel state of the MF to the precontrolling-party user unit, and sends a media session ending request to the controlling-party user unit.

The session control function unit receives a response of the controlling-party user unit, and sends a response acknowledgement to the MF.

The MF establishes the media control channel with the precontrolling-party user unit, and releases the media control channel established with the controlling-party user unit according to the received response acknowledgement.

Further, on the basis of the embodiment as shown in FIG. 3, the receiving the media control channel transfer request through a conference function unit and a service control function unit specifically can further include the following steps:
The conference function unit receives the media control channel transfer request of the precontrolling-party user unit.

The conference function unit authorizes the precontrolling-party user unit and sends a session modifying request.

The conference function unit receives a media control channel parameter of the precontrolling-party user unit, and forwards the media control channel parameter to a service control function unit.

The service control function unit sends the media control channel parameter of the precontrolling-party user unit to the MF.

Further, on the basis of the embodiment as shown in FIG. 3, the establishing the media control channel with the precontrolling-party user unit, and releasing the media control channel established with the controlling-party user unit through the conference function unit and the service control function unit include the following steps.

The service control function unit receives the media control channel parameter and the media control channel state of the MF and sends the media control channel parameter and the media control channel state to the conference function unit.

The conference function unit sends the media control channel parameter and the media control channel state of the MF to the precontrolling-party user unit.

The conference function unit sends a conference session modifying request to the controlling-party user unit, receives a request response of the controlling-party user unit, and sends a response acknowledgement to the service control function unit.

The service control function unit sends the response acknowledgement to the MF.

According to the response acknowledgement, the MF establishes the media control channel with the precontrolling-party user unit, and the MF releases the media control channel established with the controlling-party user unit.

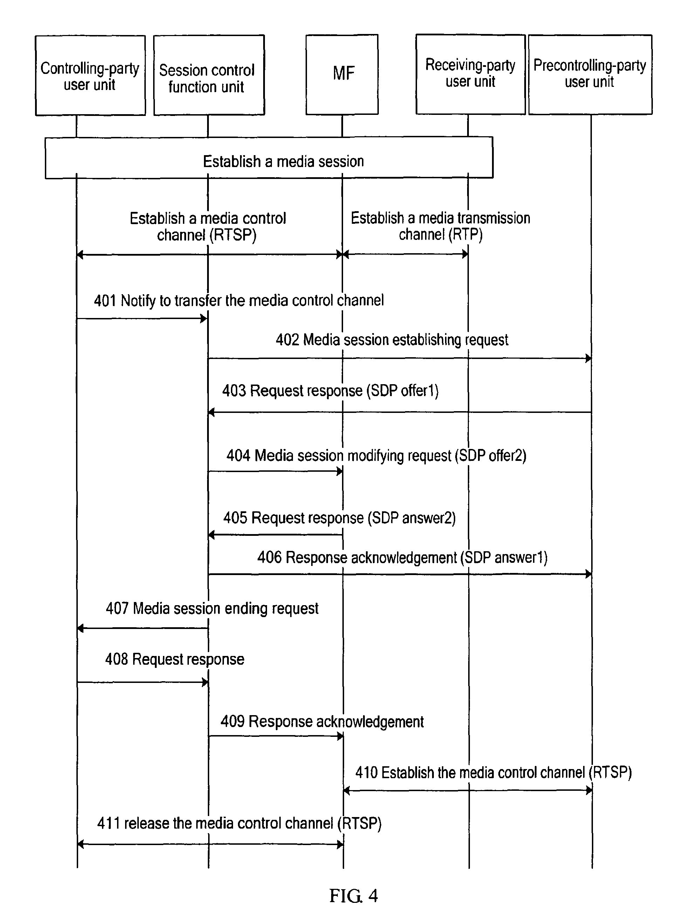

FIG. 4 is a schematic flow chart of another method for transferring a control channel according to an embodiment of the present invention. In the method for transferring the control channel according to the embodiment of the present invention, as shown in FIG. 4, through a session control function unit, a controlling-party user unit and a receiving-party user unit establish media sessions with an MF, the controlling-party user unit controls media playing through an RTSP media control channel, and the receiving-party user unit receives media content through an RTP media transmission channel. Then the controlling-party user unit intends that a precontrolling-party user unit performs playing control on the media content, such as fast forward, fast rewind or pause. The method includes the following steps.

Step 401: The controlling-party user unit initiates a third-party call through the session control function unit, that is, the controlling-party user unit send a media control channel transfer notification to notify the session control function unit that the session control function unit needs to transfer the media control channel, and the media control channel transfer notification includes information of the precontrolling-party user unit.

Step 402: After receiving the media control channel transfer notification, the session control function unit sends a media session establishing request to the precontrolling-party user unit, the request may not carry an SDP, and meanwhile the request includes media content description information.

Step 403: After receiving the request, the precontrolling-party user unit returns a request response. The request response includes an SDP offer1, that is, a media control channel parameter of the precontrolling-party user unit.

Step 404: After receiving the request response of the precontrolling-party user unit, the session control function unit sends a media session modifying request to the MF and requests to transfer the media control channel, and the request includes an SDP offer2, that is, includes the media control channel parameter of the precontrolling-party user unit and a current RTSP session identifier.

Step 405: After receiving the media session modifying request, the MF returns a request response. The request response includes an SDP answer2, that is, a media control channel parameter (such as a session identifier of a current media control channel, an RTSP URL, a current playing position, and a use identifier) and control state information of the MF. The MF can further prohibit the controlling-party user unit from changing a current RTSP control state.

Step 406: After receiving the request response of the MF, the session control function unit sends a response acknowledgement to the precontrolling-party user unit. The response acknowledgement includes an SDP answer1, that is, the media control channel parameter and the control state information of the MF.

Step 407: After receiving the request response of the MF, the session control function unit sends a media session ending request to the controlling-party user unit.

Step 408: After receiving the media session ending request of the session control function unit, the controlling-party user unit sends a request response.

Step 409: After receiving the request response of the controlling-party user unit, the session control function unit sends a response acknowledgement to the MF, so as to represent that the controlling-party user unit is willing to end the media session, and further represent that the precontrolling-party user unit has received the media control channel parameter and the control state information of the MF.

Step 410: After receiving the response acknowledgement of the session control function unit, the MF establishes a new RTSP media control channel with the precontrolling-party user unit according to the media control channel parameter of the precontrolling-party user unit.

Step 411: After learning that the controlling-party user unit is willing to end the media session, the MF releases the media control channel established with the controlling-party user unit.

The RTSP control state includes a current playing state, a method for triggering the current state, and relevant parameters. The RTSP control state can be described in the SDP, and can also be described in a message body in other modes, such as an Extensible Markup Language (XML) mode.

In the SDP, the RTSP control state can be described by adding new attributes:
for RTSP 1.0 (basic states include: Init, Ready, Playing, and Recording)
   a=fmtp:rtsp state: a current state, a current method, a parameter, ..., a parameter, for example:
   a=fmtp:rtsp state:Ready PAUSE
   a=fmtp:rtsp state:Playing PLAY Scale:2
   a=fmtp:rtsp state:Recording RECORD
for RTSP 2.0 (basic states include: Init, Ready, and Play)
   a=fmtp:rtsp state: current state, current method, parameter,...parameter, such as:
   a=fmtp:rtsp state:Ready PAUSE
   a=fmtp:rtsp state:Play PLAY Scale:2
which can also be described in the XML mode:
   <rtsp state>
      <state> </state>
      <method> </method>
      <parameter> </parameter>
   </rtsp state>

The current method and the parameters are optional.

Further, in the method for transferring the control channel according to the embodiment of the present invention, the controlling-party user unit can also transfer the media control channel to one receiving-party user unit, and the session control function unit needs to notify the RTSP control state to the receiving-party user unit, and at the same time associate the RTSP media control channel with the RTP media transmission channel and notify the receiving-party user unit, so as to facilitate processing of a playing application of the receiving-party user unit.

In the method for transferring the control channel according to the embodiment of the present invention, the session control function unit sends the media control channel transfer request, and reestablishes a media control channel, so the precontrolling-party user unit obtains a control right for the media playing, thus effectively realizing transfer of the media control channel, and improving the user experience at the time of using a service.

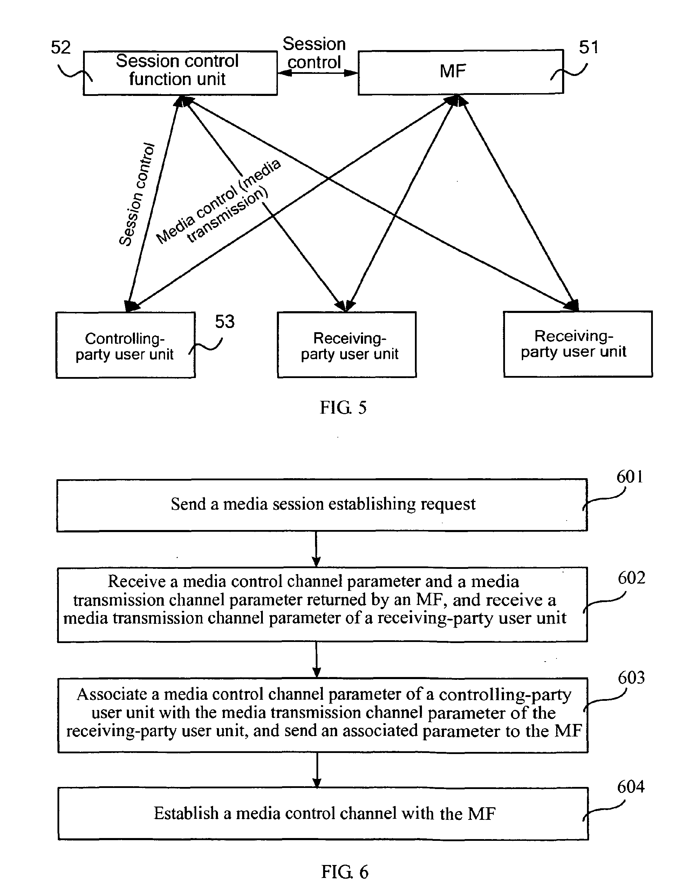

FIG. 5 is a schematic structural view of a system for establishing a multi-user service according to an embodiment of the present invention. As shown in FIG. 5, the system includes a session control function unit 52, an MF 51, and a user unit. The session control function unit 52 is responsible for managing a media control channel and a media transmission channel between a user unit and an MF. For example, the media control channel or the media transmission channel is transferred from one user unit to another user unit. The MF 51 is responsible for establishing and managing a media session with a user unit, and providing media control and media content distribution for the user unit, which include processing such as media stream control, media stream transmission, monitoring transmission function state, and interaction with a user terminal. The user unit receives and demonstrates media content, or performs playing control on the media content.

One more specific embodiment is as follows.

The session control function unit 52 is configured to initiate a third-party call, then according to a media control channel parameter and a media transmission channel parameter of the MF sent by the MF, a media control channel parameter sent by a controlling-party user unit, and a media transmission channel parameter sent by a receiving-party user unit, send the media control channel parameter and the media transmission channel parameter of the MF to the controlling-party user unit and the receiving-party user unit respectively, associate the media control channel parameter of the controlling-party user unit with the media transmission channel parameter of the receiving-party user unit, send an associated parameter to the MF, help the controlling-party user unit to establish the media control channel with the MF, and help the receiving-party user unit to establish the media transmission channel with the MF.

The MF 51 is configured to receive a third-party call of the controlling-party user unit, and send a media control channel parameter and a media transmission channel parameter of a network side; further configured to receive the associated parameter according to the media control channel parameter and the media transmission channel parameter of the network side, in which the associated parameter includes the media control channel parameter of the controlling-party user unit and the media transmission channel parameter of the receiving-party user unit; further configured to establish the media control channel with the controlling-party user unit according to the media control channel parameter of the controlling-party user unit; and further configured to establish the media transmission channel with the receiving-party user unit according to the media transmission channel parameter of the receiving-party user unit.

The controlling-party user unit 53 is configured to receive the third-party call, and then establish the media control channel with the MF according to the media control channel parameter of the MF sent by the MF.

In the embodiment of the present invention, the session control function unit can be located at the network side; and can also be located at a user unit side, that is, integrated in the user unit. According to the embodiment of the present invention, through the session control function unit, the media sessions are established between the MF and the controlling-party user unit and between the MF and the receiving-party user unit, so a plurality of user units can achieve synchronous watching and synchronous control, thereby improving user experience and enrich functions of the multi-user service.

The session control function unit 52 is further configured to receive a media session modifying request of the controlling-party user unit, and send a media session establishing request to the precontrolling-party user unit; further configured to receive the media control channel parameter of the precontrolling party according to the media session establishing request; further configured to send the media control channel parameter of the precontrolling party and a session identifier of the current media control channel to the MF; further configured to receive the media control channel parameter and a media control channel state of the network side, then forward them to the precontrolling party, and send a session ending request to the controlling-party; and further configured to send a response acknowledgement to the MF according to a response of the controlling-party user unit.

The method in which the media control channel parameter of the precontrolling-party user unit is sent to the MF through the session control function unit according to the embodiment achieves transfer of the media control channel. Therefore, user experience is improved, and service functions are enriched.

In the embodiment of the present invention, the session control function unit can be located at the network side; and can also be located at the user unit side, that is, integrated in the user unit.

FIG. 6 is a schematic flow chart of a method for establishing a multi-user service according to another embodiment of the present invention. As shown in FIG. 6, this embodiment includes the following steps:
Step 601: Send a media session establishing request.
Step 602: Receive a media control channel parameter and a media transmission channel parameter returned by an MF, and receive a media transmission channel parameter of a receiving-party user unit.
Step 603: Associate a media control channel parameter of a controlling-party user unit with the media transmission channel parameter of the receiving-party user unit, and send an associated parameter to the MF.
Step 604: Establish a media control channel with the MF.

In the method for establishing the multi-user service according to the embodiment of the present invention, the media control channel is established with the MF, so the receiving-party user unit receives media content after control playing, thereby realizing multi-user synchronous watching and synchronous control, effectively improving the user experience, and extending the service content.

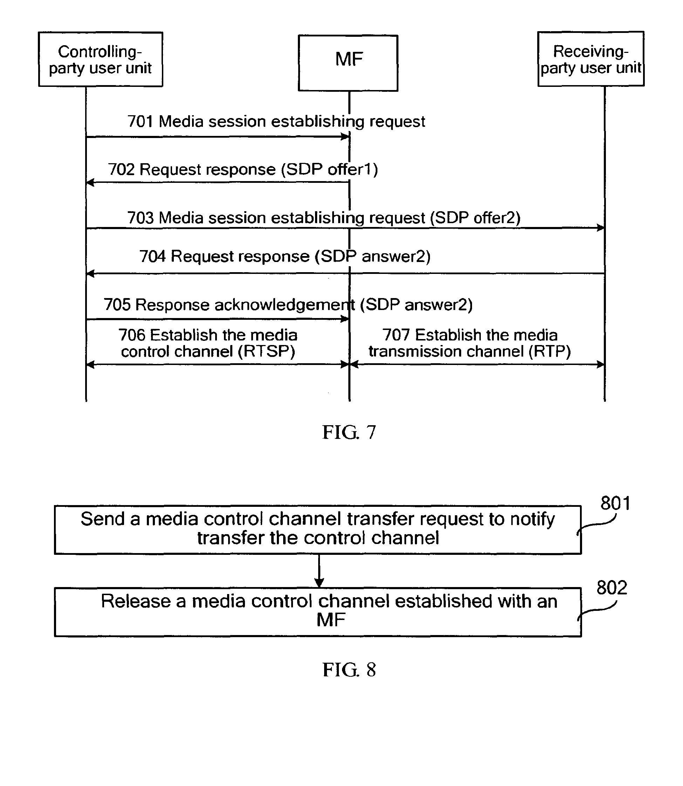

FIG. 7 is a schematic flow chart of a further method for establishing a multi-user service according to another embodiment of the present invention. As shown in FIG. 7, a session control function unit is integrated in a controlling-party user unit. The method includes the following steps:
Step 701: The controlling-party user unit intends to invite one or more receiving-party user units to watch a certain content, and the controlling-party user unit initiates a third-party call, that is, the session control function unit of the controlling-party user unit sends a media session establishing request without an SDP to an MF.
Step 702: According to the media session establishing request of the controlling-party user unit, the MF returns a request response. The response includes an SDP offer1, that is, an RTSP media control channel parameter and an RTP media transmission channel parameter of the MF, where the RTSP media control channel parameter includes an RTSP media control channel session identifier and an RTSP URL.
Step 703: The controlling-party user unit sends the media session establishing request to the receiving-party user unit. The request carries an SDP offer2, that is, the RTP media transmission channel parameter of the MF.
Step 704: The receiving-party user unit returns a request response according to the media session establishing request sent by the controlling-party user unit. The response includes an SDP answer2, that is, an RTP media transmission channel parameter of the receiving-party user unit.
Step 705: After receiving the SDP answer2, the controlling-party user unit associates the RTP media transmission channel parameter of the receiving-party user unit with an RTSP media control channel parameter of the controlling-party user unit, generates an SDP answer1, that is, an associated parameter, and finally sends the SDP answer1 to the MF, so as to acknowledge the response of the MF in Step 202.
Step 706: The MF establishes an RTSP media control channel with the controlling-party user unit according to the SDP answer1.
Step 707: The MF establishes an RTP media transmission channel with the receiving-party user unit according to the SDP answer1.

In the embodiment of the present invention, the user unit can be a terminal, user equipment or a set top box, and is also the same as those in other embodiments. In the method for establishing the multi-user service according to the embodiment of the present invention, when the controlling-party user unit controls media playing through the RTSP media control channel, the MF sends the media content after control playing to the receiving-party user unit through the RTP media transmission channel.

If the MF does not support establishment of the media control channel directly through SDP negotiation, the controlling-party user unit needs to send an RTSP SETUP command to the MF after finishing SDP negotiation, and requests to establish the media control channel. The MF returns the media control channel session identifier in the request response.

In the method for establishing the multi-user service according to the embodiment of the present invention, the third-party call is initiated through the controlling-party user unit, and the RTSP media control channel is established between the MF and the controlling-party user unit, so that the controlling-party user unit performs operations such as fast forward, fast rewind or pause on the media playing. Furthermore, the RTP media transmission channel is established between the MF and the receiving-party user unit, so that the receiving-party user unit receives the media content after playing control, thus realizing the multi-user synchronous watching and synchronous control, effectively improving the user experience, and extending the service content.

FIG. 8 is a schematic flow chart of a method for transferring a control channel according to another embodiment of the present invention. As shown in FIG. 8, this embodiment includes the following steps:
Step 801: Send a media control channel transfer request to notify transfer of the control channel.
Step 802: Release a media control channel established with an MF.

In the method for transferring the control channel according to the embodiment of the present invention, the media control channel transfer request is sent to notify the transfer of the control channel, so as to achieve transfer of the media control channel, effectively release the media control channel established with the MF, improve user autonomy of using a multi-user service (such as IPTV), and enrich functions of the multi-user service.

Further, on the basis of the embodiment shown in FIG. 8, the sending the media control channel transfer request to notify the transfer of the control channel can include the following steps:
The media control channel transfer request is sent to the MF, and the MF is notified that it needs to establish the media control channel with a precontrolling-party user unit.

Alternatively, the media control channel transfer request is sent to the precontrolling-party user unit, and the precontrolling-party user unit is notified that it needs to establish the media control channel with the MF.

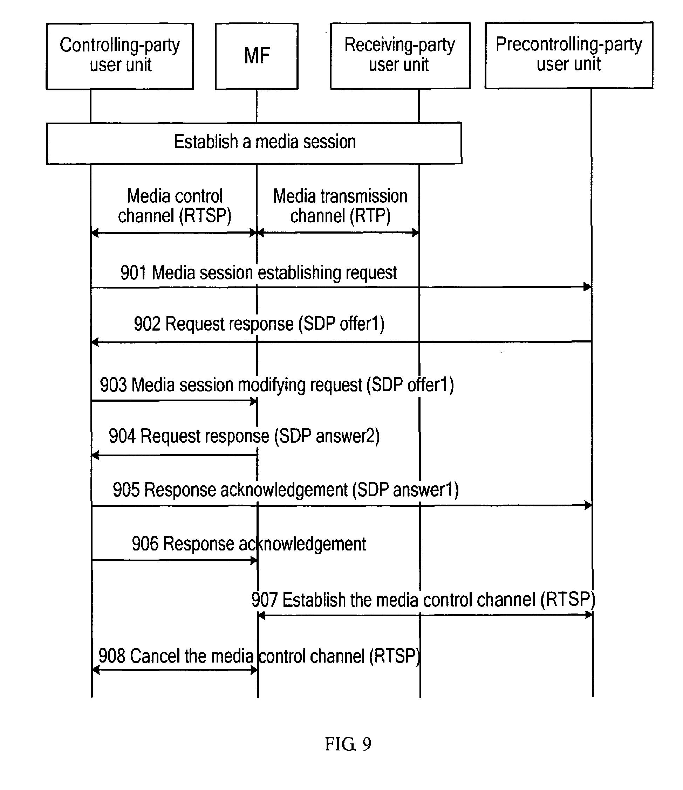

FIG. 9 is a schematic flow chart of another method for transferring a control channel according to another embodiment of the present invention. A session control function unit is integrated in a controlling-party user unit. Media sessions are established between a controlling-party user unit and an MF and between a receiving-party user unit and an MF, that is, an RTSP media control channel is established between the MF and the controlling-party user unit, and an RTP media transmission channel is established between the MF and the receiving-party user unit. The controlling-party user unit intends that a third-party user unit (that is, a precontrolling-party user unit) controls media playing. The method includes the following steps:
Step 901: Initiate a third-party call through the session control function unit in the controlling-party user unit, that is, send a media session establishing request to the precontrolling-party user unit, and the request does not carry an SDP.
Step 902: According to the media session establishing request of the controlling-party user unit, the precontrolling-party user unit returns a request response. The request response includes an SDP offer1, that is, includes a media control channel parameter of the precontrolling-party user unit.
Step 903: The controlling-party user unit sends a media session modifying request to the MF and requests to transfer the media control channel. The request includes an SDP offer2, that is, includes the media control channel parameter of the precontrolling-party user unit and a current RTSP session identifier.
Step 904: The MF sends a request response according to the media session modifying request. The response includes an SDP answer2, that is, a media control channel parameter (such as a current RTSP media control channel session identifier, an RTSP URL, a current playing position, and a connection attribute) and RTSP control state information (a play state) of the MF, and prohibits the controlling-party user unit from changing a current RTSP control state at the same time.
Step 905: After receiving the request response of the MF, the controlling-party user unit sends a response acknowledgement including an SDP answer1 to the precontrolling-party user unit, and the SDP answer1 includes the media control channel parameter and the RTSP control state information of the MF.
Step 906: The controlling-party user unit sends a response acknowledgement to the MF.
Step 907: After receiving the response acknowledgement, the MF establishes the RTSP media control channel with the precontrolling-party user unit according to the media control channel parameter of the precontrolling-party user unit, and the MF transfers an original control state to a new media control channel, and permits the precontrolling-party user unit to change the control state. Here, after the RTSP media control channel is established between the MF and the precontrolling-party user unit, the precontrolling-party user unit utilizes a state parameter sent by the MF to set an RTSP state machine.
Step 908: The MF and the controlling-party user unit release the media control channel, and both parties release corresponding resources respectively.

In the method for transferring the control channel according to the embodiment of the present invention, the controlling-party user unit can also transfer the media control channel to the receiving-party user unit, and at this time, the controlling-party user unit needs to notify the RTSP control state to the receiving-party user unit, associate the RTSP media control channel with the RTP media transmission channel at the same time, and notify the associated result to the receiving-party user unit, so the receiving-party user unit performs corresponding processing.

If the MF does not support establishment of the media control channel directly through SDP negotiation, the precontrolling-party user unit needs to send an RTSP SETUP command to the MF after the SDP negotiation is completed, and request to establish the media control channel. The MF needs to send the current RTSP media control channel session identifier and a use identifier (indicating that the media control channel is being used and a connection attribute a=connection:existing is utilized) to the precontrolling-party user unit during session negotiation, so the precontrolling-party user unit uses the current media control channel session identifier in an RTSP SETUP request. The current RTSP media control channel session identifier can be described in the SDP through identifier information, and can also be described in a message body in other modes, such as an XML mode. After the media control channel is established, the precontrolling-party user unit learns that the media control channel has a control state according to an identifier provided by the MF, and utilizes an RTSP GET_PARAMETER command to acquire the current RTSP control state from the MF.

In the method for transferring the control channel according to the embodiment of the present invention, a media control channel is reestablished between the MF and the precontrolling-party user unit, transfer of the media control channel is achieved and a disadvantage of being incapable of transferring the media control channel in the prior art is overcome, so as to effectively achieve the transfer of the media control channel, improve the user experience of using a multi-user service (such as IPTV), and enrich functions of the multi-user service.

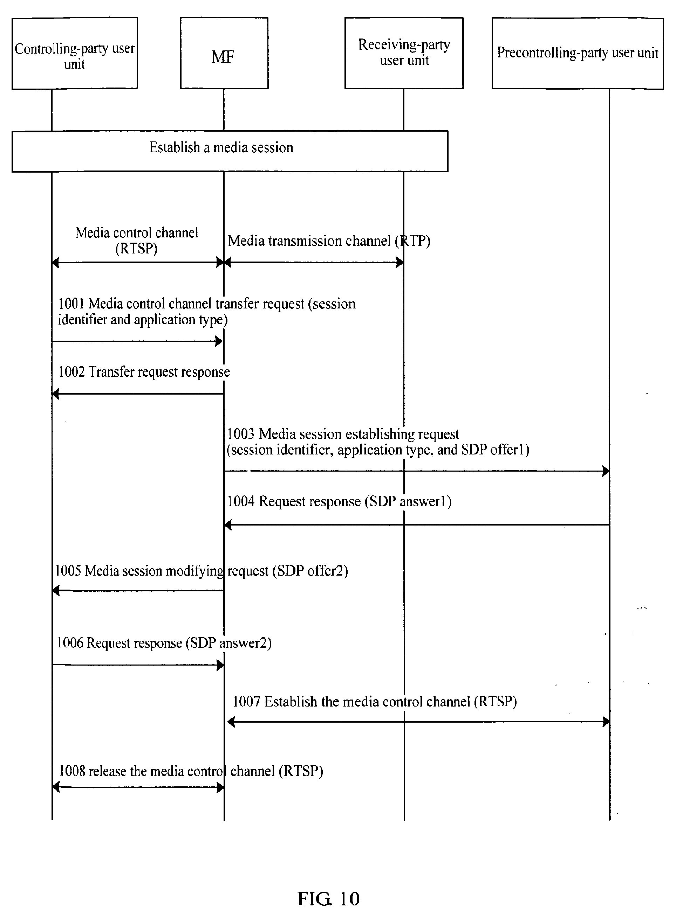

FIG. 10 is a schematic flow chart of an additional method for transferring a control channel according to another embodiment of the present invention. A media session is established between a controlling-party user unit and an MF and between a receiving-party user unit and the MF, that is, an RTSP media control channel is established between the MF and the controlling-party user unit, and an RTP media transmission channel is established between the MF and the receiving-party user unit. The controlling-party user unit intends that a third-party user unit (that is, a precontrolling-party user unit) controls media playing. The embodiment includes the following steps.

Step 1001: A media control channel transfer request is sent to the MF through a session control function unit in the controlling-party user unit, to notify the MF that the MF needs to establish a media control channel with the precontrolling-party user unit. The request includes a session identifier and an application type (used to indicate to transfer an RTSP channel) of the controlling-party user unit and the MF.

```
         REFER sip:MF@example.com SIP/2.0
         To: <sip:MF @example.com >
         From: <sip: UE1 @example.com>
         Refer-To:<sip:UE3@example.com?moblity="123@mobile.example.com;
                   application=RTSP;to-tag=aaa;from-tag=bbb">
         Referred-By: <sip:UE1@example.com>
```

Step 1002: The MF returns a transfer request response.

Step 1003: According to the media control channel transfer request of the controlling-party user unit, the MF sends a media session establishing request to the precontrolling-party user unit, and requests to establish the media control channel. The request includes a session identifier and an application type (the application type is used to indicate to transfer the RTSP channel) of the controlling-party user unit and the MF, and further includes an SDP offer1, and the SDP offer1 includes a media control channel parameter (such as a current RTSP media control channel session identifier, an RTSP URL, a current playing position, and a connection attribute) and RTSP control state information (such as a play state) of the MF.

Step 1004: According to the media session establishing request of the MF, the precontrolling-party user unit returns a request response. The request response includes an SDP answer1, that is, the SDP answer1 includes a media control channel parameter of the precontrolling-party user unit.

Step 1005: The MF sends a media session modifying request to the controlling-party user unit and requests to release the media control channel, and the request includes an SDP offer2. Specifically, the media control channel parameter in the SDP offer2 is set to an invalid value, that is, if "0" denotes the invalid value, a media control channel port is set to "0".

Step 1006: The controlling-party user unit sends a request response according to the media session modifying request, and the response includes an SDP answer2. Specifically, the media control channel parameter in the SDP answer2 is set to an invalid value, that is, if "0" denotes the invalid value, a media control channel port is set to "0".

Step 1007: After receiving the response, the MF establishes the RTSP media control channel with the precontrolling-party user unit according to the media control channel parameter of the precontrolling-party user unit, transfers an original control state to a new media control channel, and permits the precontrolling-party user unit to change the control state. Here, after the RTSP media control channel is established between the MF and the precontrolling-party user unit, the precontrolling-party user unit utilizes a state parameter sent by the MF to set an RTSP state machine.

Step 1008: The MF and the controlling-party user unit release the media control channel, and both parties release corresponding resources respectively.

The controlling-party user unit can also send the media control channel transfer request to the precontrolling-party user unit to notify the precontrolling-party user unit that the precontrolling-party user unit needs to establish the media control channel with the MF. The request includes a session identifier and an application type (used to indicate to transfer an RTSP channel) of the controlling-party user unit and the MF.

If the MF does not support establishment of the media control channel directly through SDP negotiation, the precontrolling-party user unit needs to send an RTSP SETUP command to the MF after the SDP negotiation is completed, and requests to establish the media control channel. The MF needs to send the current RTSP media control channel session identifier and a use identifier (indicating that the media control channel is being used and a connection attribute a=connection:existing is utilized) to the precontrolling-party user unit during session negotiation, so that the precontrolling-party user unit uses the current media control channel session identifier in an RTSP SETUP request. The current RTSP media control channel session identifier can be described in the SDP through identifier information, and can also be described in a message body in other modes, such as an XML mode. After the media control channel is established, the precontrolling-party user unit learns that the media control channel has a control state according to an identifier provided by the MF, and utilizes an RTSP GET_PARAMETER command to acquire the current RTSP control state from the MF.

In the another method for transferring the control channel according to the embodiment of the present invention, the MF is notified that it needs to reestablish a media control channel with the precontrolling-party user unit by adding an application type in a request, so as to achieve transfer of the media control channel, effectively achieve the transfer of the media control channel, improve user experience of using a multi-user service (such as IPTV), and enrich functions of the multi-user service.

Further, in the another method for transferring the control channel according to the embodiment of the present invention, the precontrolling-party user unit can further be notified that it needs to reestablish a media control channel with the MF by adding an application type in a request. This triggering method is similar to the triggering method in another method for transferring the control channel according to the embodiment of the present invention, which is no longer described here one by one.

The method for establishing the multi-user service and the method for transferring the control channel according to the embodiments of the present invention can be achieved based on an SIP technology.

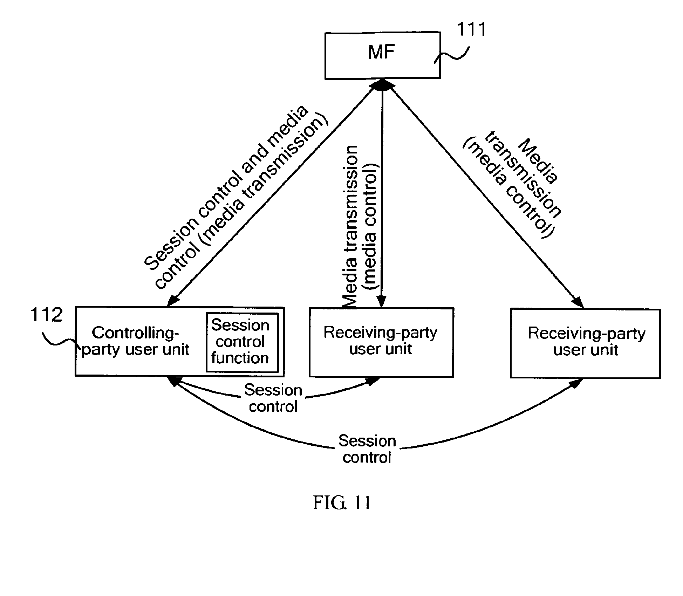

FIG. 11 is a schematic structural view according to another embodiment of the present invention. As shown in FIG. 11, in the embodiment, one MF 111 and a plurality of user units are mainly included. The MF 111 is responsible for establishing and managing a media session with a user unit, and providing media control and media distribution for the user unit, including processing such as media stream control, media stream transmission, monitoring transmission function state, and interaction with a user unit. The user unit receives and demonstrates media content, and can perform playing control on the content, and can manage transfer of a media control channel at the same time. A session control function unit is combined with a controlling-party user unit, so that the media control channel and a media transmission channel can be managed. For example, the media control channel or the media transmission channel is transferred from one terminal to another terminal. Here, before the media session is established, a user unit that controls media playing is referred to as the controlling-party user unit, and a user unit receiving media content is referred to as a receiving-party user unit. After the media session is established, the controlling-party user unit is referred to as a controlling-party user unit, and a user unit that is about to control the media playing is referred to as a precontrolling-party user unit. Same usage is adopted in the following other embodiments.

A specific structure and function of the device embodiment at the time of establishing a multi-user service are as follows.

The controlling-party user unit 112 is configured to initiate a third-party call, then according to a media control channel parameter and a media transmission channel parameter of the MF sent by the MF, and a media transmission channel parameter of the receiving-party user unit sent by the receiving-party user unit, send the media transmission channel parameter of the MF to the receiving-party user unit, associate the media control channel parameter of the controlling-party user unit with the media transmission channel parameter of the receiving-party user unit, send an associated parameter to the MF, establish the media control channel with the MF, and help the receiving-party user unit to establish the media transmission channel with the MF.

The MF 111 is configured to receive a third-party call of the controlling-party user unit, and send a media control channel parameter and a media transmission channel parameter of a network side; further configured to receive the associated parameter according to the media control channel parameter and the media transmission channel parameter of the network side, in which the associated parameter includes the media control channel parameter of the controlling-party user unit and the media transmission channel parameter of the receiving-party user unit; further configured to establish the media control channel with the controlling-party user unit according to the media control channel parameter of the controlling-party user unit; and further configured to establish the media transmission channel with the receiving-party user unit according to the media transmission channel parameter of the receiving-party user unit.

In the embodiment, the controlling-party user unit initiates the third-party call, associates the media transmission channel parameter of the receiving-party user unit with the media control channel parameter of the controlling-party user unit, and then exchanges information with the MF, so as to overcome the disadvantage of being incapable of realizing synchronous watching and synchronous control in the multi-user service in the prior art, achieve the synchronous watching and the synchronous control of the multi-user service, and effectively improve the user experience.

When the device embodiment is transferring the media control channel, the MF 111 is configured to receive a media session modifying request, and send a media control channel parameter and a media control channel state of a network side; and further configured to establish the media control channel with the precontrolling-party user unit, and release the media control channel established with the controlling-party user unit.

In the embodiment, after being enabled to receive the media control channel parameter of the precontrolling-party user unit, the MF establishes a new media control channel with the precontrolling-party user unit, and releases the original media control channel established with a controlling-party user unit, so that the transfer of the media control channel is effectively achieved, and the disadvantage of being incapable of transferring the media control channel in the prior art is overcome, so as to enrich functions of the multi-user service and improve the user experience.

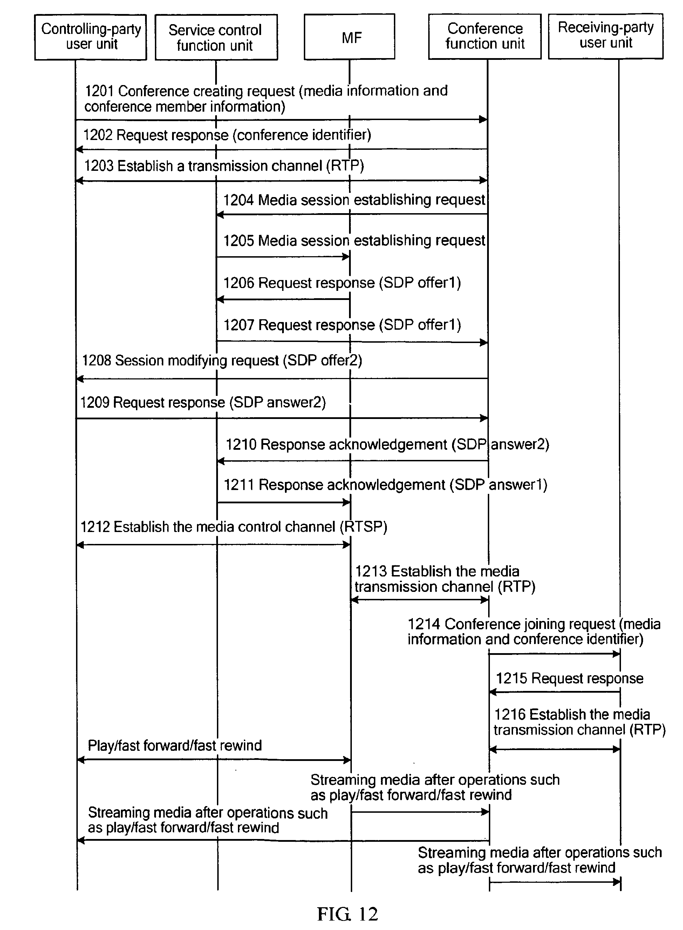

FIG. 12 is a schematic flow chart of a method for establishing a multi-user service according to a further embodiment of the present invention. In another method for establishing the multi-user service according to the embodiment of the present invention, a media is synchronously played to a plurality of receiving-party user units through a conference function unit. In the schematic flow chart as shown in FIG. 12, the method includes the following steps.

Step 1201: A controlling-party user unit intends to invite other user units to watch certain media content together, so the controlling-party user unit sends a conference creating request to the conference function unit, and the request includes information (such as a URL of the user unit) of other user units to be invited to a conference and media information.

Step 1202: After receiving the conference creating request, the conference function unit returns a request response. The request response includes a conference identifier.

Step 1203: Establish an RTP transmission channel for transmitting conference content between the controlling-party user unit and the conference function unit.

Step 1204: After receiving the conference creating request, the conference function unit initiates a third-party call according to information provided by the controlling-party user unit, that is, sends a media session establishing request to a service control function unit, and the request does not carry an SDP.

Step 1205: After receiving the media session establishing request of the conference function unit, the service control function unit forwards the request to an MF.

Step 1206: After receiving the media session establishing request forwarded by the service control function unit, the MF sends a request response to the service control function unit. The request response includes an SDP offer1, that is, a media control channel parameter and a media transmission channel parameter of the MF.

Step 1207: After receiving the request response of the MF, the service control function unit forwards the request response to the conference function unit.

Step 1208: After receiving the request response forwarded by the service control function unit, the conference function unit sends a session modifying request to the controlling-party user unit, and the request includes an SDP offer2, that is, the media control channel parameter of the MF. Practically, besides session modification, establishment of a new media session can be further requested.

Step 1209: After receiving the session modifying request, the controlling-party user unit sends a request response to the conference function unit. The request response includes an SDP answer2, that is, a media control channel parameter of the controlling-party user unit.

Step 1210: After receiving the request response of the controlling-party user unit, the conference function unit sends a response acknowledgement to the service control function unit, so as to represent that the conference function unit receives the request response of the MF, and the response acknowledgement includes an SDP answer1, that is, the media control channel parameter of the controlling-party user unit and a media transmission channel parameter of the conference function unit.

Step 1211: After receiving the response acknowledgement of the conference function unit, the service control function unit forwards the response acknowledgement to the MF.

Step 1212: After receiving the response acknowledgement forwarded by the service control function unit, the MF establishes an RTSP media control channel with the controlling-party user unit according to the media control channel parameter of the controlling-party user unit.

Step 1213: After receiving the response acknowledgement forwarded by the service control function unit, the MF establishes an RTP media transmission channel with the conference function unit according to the media transmission channel parameter of the conference function unit.

Step 1214: After receiving the conference creating request of the controlling-party user unit and agreeing to create a conference, the conference function unit sends a conference joining request to the receiving-party user unit according to the information provided by the controlling-party user unit, and the request includes the media transmission channel parameter, media information, and a conference identifier of the conference function unit.

Step 1215: After receiving the conference joining request, the receiving-party user unit sends a request response to the conference function unit to represent to agree to join the conference. The request response includes a media transmission channel parameter of the receiving-party user unit.

Step 1216: Establish the RTP media transmission channel between the conference function unit and the receiving-party user unit to receive the media content.

In the method for establishing the multi-user service according to the embodiment of the present invention, the media control channel is established between the controlling-party user unit and the MF, the media transmission channel is established between the conference function unit and the MF, and the media transmission channel is established between the conference function unit and the user unit, so after the controlling-party user unit controls media playing, the MF sends the media to the conference function unit and distributes the media to all user units in the conference through the conference function unit, thus achieving the synchronous watching and the synchronous control in multi-user media playing, so as to overcome the disadvantage of being incapable of synchronous watching and synchronous control in the prior art, improve the user experience, and enrich functions of a multi-user media playing service.

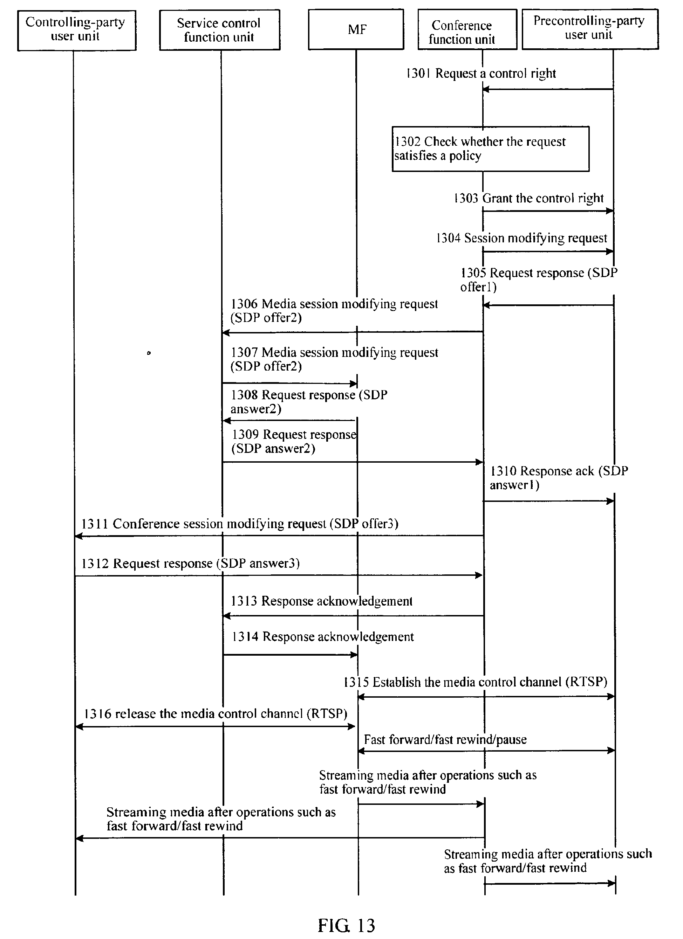

FIG. 13 is a schematic flow chart of a method for transferring a control channel according to a further embodiment of the present invention. As shown in FIG. 13, the embodiment includes the following steps.

Step 1301: To control media playing, a precontrolling-party user unit requests a control right from a conference function unit.

Step 1302: The conference function unit checks whether the request satisfies a policy according to the request of the precontrolling party.

Step 1303: Check a result. If a control policy is satisfied, the conference function unit sends a request response to the precontrolling-party user unit, and grants the control right to the precontrolling-party user unit.

Step 1304: The conference function unit initiates a third-party call, that is, sends a session modifying request to the precontrolling-party user unit. The request does not include an SDP. Practically, a new media session establishing request can be further sent.

Step 1305: After receiving the request, the precontrolling-party user unit sends a request response. The request response includes an SDP offer1, that is, a media control channel parameter of the precontrolling-party user unit.

Step 1306: After receiving the request response of the precontrolling-party user unit, the conference function unit sends a media session modifying request to a service control function unit, and the request includes an SDP offer2, that is, the media control channel parameter of the precontrolling-party user unit.

Step 1307: After receiving the media session modifying request of the conference function unit, the service control function unit forwards the media session modifying request to an MF.

Step 1308: After receiving the media session modifying request forwarded by the service control function unit, the MF sends a request response to the service control function unit. The request response includes an SDP answer2, that is, a media control channel parameter of the MF.

Step 1309: After receiving the request response sent by the MF, the service control function unit forwards the request response to the conference function unit.

Step 1310: After receiving the request response forwarded by the service control function unit, the conference function unit sends a response acknowledgement to the precontrolling-party user unit, so as to represent that the conference function unit has received the request response sent by the precontrolling-party user unit, and the response acknowledgement includes an SDP answer1, that is, the media control channel parameter of the MF.

Step 1311: After receiving the request response sent by the MF, the conference function unit sends a conference session modifying request to a controlling-party user unit. The request includes an SDP offer3, that is, a media control channel parameter of the MF used to release the media control channel.

Step 1312: After receiving the conference session modifying request, the controlling-party user unit sends a request response to the conference function unit. The request includes an SDP answer3, that is, a media control channel parameter of the controlling-party user unit used to release the media control channel.

Step 1313: After receiving the request response sent by the controlling-party user unit and the request response sent by precontrolling party, the conference function unit sends a response acknowledgement to the service control function unit, so as to represent that the precontrolling-party user unit has received the media control channel parameter of the MF, and further represent that the controlling-party user unit has agreed to release the media control channel.

Step 1314: After receiving the response acknowledgement sent by the conference function unit, the service control function unit forwards the response acknowledgement to the MF, so as to notify that the precontrolling-party user unit has received the media control channel parameter of the MF, and further notify that the controlling-party user unit has agreed to release the media control channel.

Step 1315: After receiving the response acknowledgement forwarded by the service control function unit, the MF establishes the media control channel with the precontrolling party according to the media control channel parameter of the precontrolling party.

Step 1316: After receiving the response acknowledgement forwarded by the service control function unit, the MF releases the media control channel between the MF and the controlling-party user unit.

In the method for transferring the control channel according to the embodiment of the present invention, after the precontrolling-party user unit is authenticated through the conference function unit, the media control channel is transferred to the precontrolling-party user unit, so as to overcome the disadvantage of being incapable of transferring the media control channel in the prior art, and guarantee stability of transfer of the media control channel.

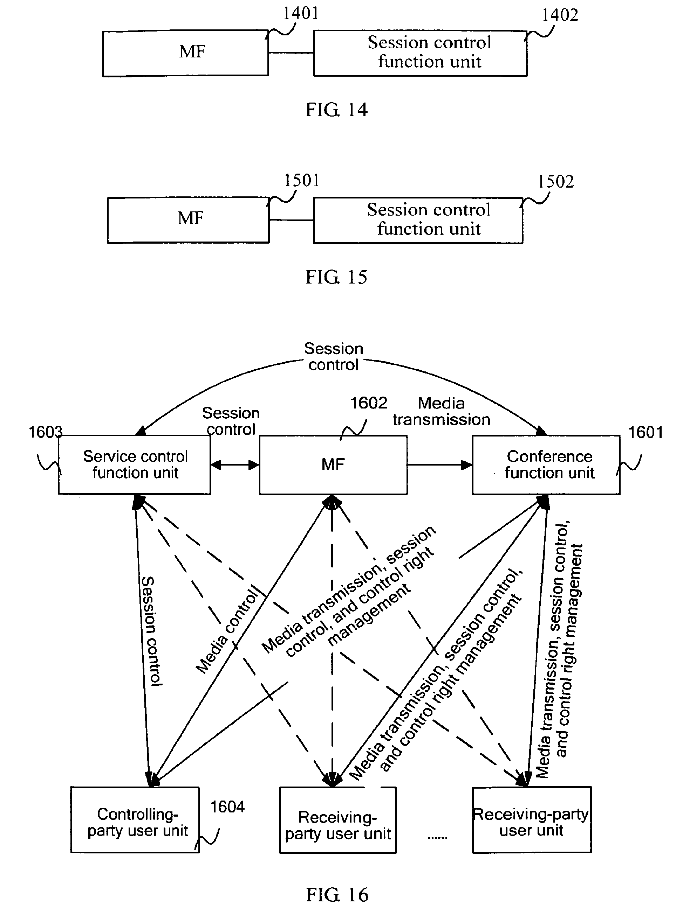

FIG. 14 is a schematic structural view of a system for establishing a multi-user service according to a further embodiment of the present invention. As shown in FIG. 14, this embodiment includes an MF 1401 and a session control function unit 1402.

The MF 1401 is configured to receive a third-party call, return a media control channel parameter and a media transmission channel parameter, receive an associated parameter, in which the associated parameter is a parameter generated by associating the media control channel parameter of a controlling-party user unit with the media transmission channel parameter of a receiving-party user unit, establish a media control channel with the controlling-party user unit according to the third-party call and the associated parameter, and establish a media transmission channel with the receiving-party user unit according to the third-party call and the associated parameter.

The session control function unit 1402 is configured to receive a session establishing request of the controlling-party user unit, and initiate the third-party call to the MF 1401 according to the session establishing request.

In the system for establishing the multi-user service according to the embodiment of the present invention, the MF 1401 establishes the media control channel and the media transmission channel respectively between the controlling-party user unit and the MF and between the receiving-party user unit and the MF, so the controlling-party user unit controls media playing through the media control channel established with the MF, and at the same time the receiving-party user unit receives media content through the transmission channel established with the MF. In this way, a function of multi-user synchronous control and synchronous watching is achieved. Therefore, the user experience is improved, and functions of the multi-user service are enriched.

FIG. 15 is a schematic structural view of a system for transferring a control channel according to a further embodiment of the present invention. As shown in FIG. 15, this embodiment includes an MF 1501 and a session control function unit 1502.

The MF 1501 is configured to receive a media control channel transfer request, establish a media control channel with a precontrolling-party user unit, and release the media control channel established with a controlling-party user unit.

The session control function unit 1502 is configured to receive a media control channel transfer notification of the controlling-party user unit, send a media session establishing request to the precontrolling-party user unit, receive a returned media control channel parameter, and send the media control channel parameter of the precontrolling party and a session identifier of the current media control channel to the MF.

In the system for transferring the control channel according to the embodiment of the present invention, the session control function unit 1502 establishes the media control channel with the precontrolling-party user unit, so that the precontrolling-party user unit obtains a control right for the media playing, thus effectively realizing transfer of the media control channel and improving the user experience at the time of using a service.

FIG. 16 is a schematic structural view of a further system for transferring a control channel according to a further embodiment of the present invention. As shown in FIG. 16, the embodiment mainly includes a service control function unit 1603, an MF 1602, a conference function unit 1601, and a user unit.

The service control function unit 1603 is responsible for service verification and session modification at the time of initiating the session, which includes check of whether a user is capable of visiting the service (such as on demand). Meanwhile, the service control function unit is further responsible for credit controlling and selection of a relevant MF. The service control function unit can further invite the user to establish a media session.

The MF 1602 is responsible for providing media control and media distribution for a user terminal, which include processing such as media stream control, media stream transmission, transmission function state monitoring, and interaction with a user terminal. Meanwhile, functions such as media processing and content protection can be further provided.

The conference function unit 1601 is responsible for realizing multi-user communication and realizing communication among members in one user group by maintaining the user group. The conference function unit 1601 can use a mixer to mix a series of media streams (such as a media stream uploaded by a member in the group), generate one or more media streams, and then distribute them to all members in the group, so as to guarantee that all members can access the media stream during communication. The conference function unit 1601 further provides group member management such as joining and leaving of a member in the group, and control right management. The conference function unit 1601 can further introduce media content from other MFs, distribute the media content to a user in the group, and help the user in the group to establish playing control for the media content and help transfer of a media control channel among a plurality of users. The conference function unit 1601 is capable of learning any state changes in the group (such as changes of the control right), and sending a state alternation case to those subscribers who subscribe such information. The conference function unit 1601 can be achieved in various modes, such as a conference server and a Push to Talk over Cellular (PoC) server. In this embodiment, the conference function unit is the conference server.

The user unit receives and demonstrates media content and can perform playing control on the content.

A specific structure and function of the device embodiment at the time of establishing a multi-user service are as follows.

The MF 1602 is configured to receive a third-party call of the conference function unit, and send a media control channel parameter and a media transmission channel parameter of a network side; further configured to receive the associated parameter according to the media control channel parameter and the media transmission channel parameter of the network side, in which the associated parameter includes a media control channel parameter of a controlling-party user unit and a media transmission channel parameter of the conference function unit; further configured to establish the media control channel with the controlling-party user unit according to the media control channel parameter of the controlling-party user unit; and further configured to establish a media transmission channel with the conference function unit according to the media transmission channel parameter of the conference function unit.

The conference function unit 1601 is configured to receive a conference establishing request of the controlling-party user unit, and initiate a third-party call; and further configured to associate the media control channel parameter of the controlling-party user unit with the media transmission channel parameter of the conference function unit, generate an associated parameter, and send the associated parameter to the service control function unit.

The service control function unit 1603 is configured to forward the third-party call of the conference function unit to the MF; and further configured to forward the associated parameter of the conference function unit to the MF.

The controlling-party user unit 1604 is configured to receive the third-party call, then establish the media control channel with the MF according to the media control channel parameter of the MF sent by the MF.

In the embodiment of the present invention, the conference function unit establishes the media session with the service control function unit and the MF, so that the receiving-party user unit can synchronously watch the media content through the conference function unit. Furthermore, the controlling-party user unit synchronously operates media playing through the MF, so as to overcome the disadvantage of being incapable of realizing synchronous watching and synchronous control in the prior art, improve the user experience, and enrich functions of the service.

When the device embodiment is transferring the media control channel, the conference function unit 1601 is configured to receive a media control channel transfer request of the precontrolling-party user unit; further configured to authorize the precontrolling-party user unit and send a session modifying request; further configured to receive a media control channel parameter of the precontrolling-party user unit according to the session modifying request, and forward the media control channel parameter to the service control function unit; further configured to send the media control channel parameter of the MF to the precontrolling-party user unit; and further configured to send a conference ending request to a controlling-party user unit, and receive a response acknowledgement of the controlling-party user unit.

The service control function unit 1603 is configured to send the media control channel parameter of the precontrolling-party user unit to the MF; further configured to receive the media control channel parameter and a media control channel state of the MF and send them to the conference function unit; and further configured to send the response acknowledgement of the conference function unit to the MF.

In the embodiment, after the precontrolling-party user unit is authenticated by the conference function unit, the media control channel is transferred to the precontrolling-party user unit, so as to guarantee stability and security of the transfer procedure of the media control channel, thus overcoming the disadvantage of being incapable of transferring the media control channel in the prior art, improving user experience, and enriching functions of the service.

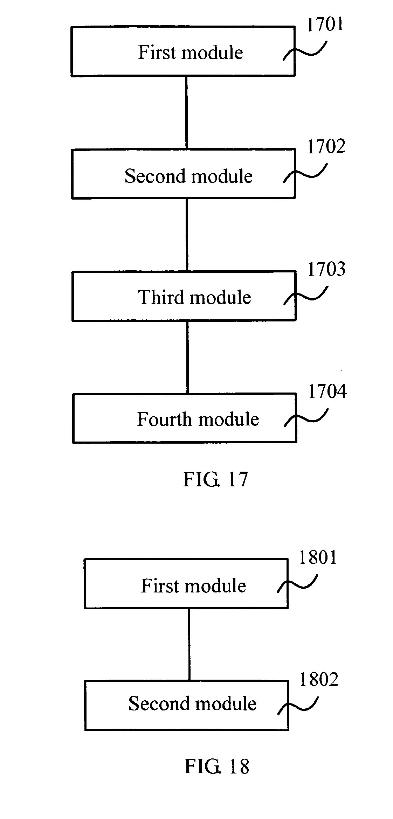

FIG. 17 is a schematic structural view of a device for establishing a multi-user service according to a further embodiment of the present invention. In an embodiment, the present invention provides a device for establishing a multi-user service. As shown in FIG. 17, the device includes a first module 1701, a second module 1702, a third module 1703, and a fourth module 1704.

The first module 1701 is configured to receive a third-party call, and return a media control channel parameter and a media transmission channel parameter.

The second module 1702 is configured to receive an associated parameter, in which the associated parameter is a parameter generated by associating the media control channel parameter of a controlling-party user unit with the media transmission channel parameter of a receiving-party user unit.

The third module 1703 is configured to establish a media control channel with the controlling-party user unit according to the third-party call and the associated parameter.

The fourth module 1704 is configured to establish a media transmission channel with the receiving-party user unit according to the third-party call and the associated parameter.

In the embodiment, the third-party call is received through the first module, and after a relevant parameter is associated through the second module, the media control channel and the media transmission channel are established through the third module and the fourth module respectively. Through the device, a purpose that the receiving-party user unit can synchronously watch the media content is achieved, and the controlling-party user unit synchronously operates media playing through the MF, so as to overcome the disadvantage of being incapable of realizing synchronous watching and synchronous control in the prior art, thus improving the user experience, and enriching functions of the service.

FIG. 18 is a schematic structural view of an additional device for transferring a control channel according to a further embodiment of the present invention. In an embodiment, the present invention provides a device for transferring a control channel. As shown in FIG. 18, the device includes a first module 1801 and a second module 1802.

The first module 1801 is configured to receive a media control channel transfer request.

The second module 1802 is configured to establish a media control channel with a precontrolling-party user unit, and release the media control channel established with a controlling-party user unit.

In the embodiment, the media control channel transfer request is received through the first module, and the media control channel is transferred through the second module, so as to guarantee stability and security of the transfer procedure of the media control channel, thus overcoming the disadvantage of being incapable of transferring the media control channel in the prior art, improving the user experience, and enriching functions of the service.

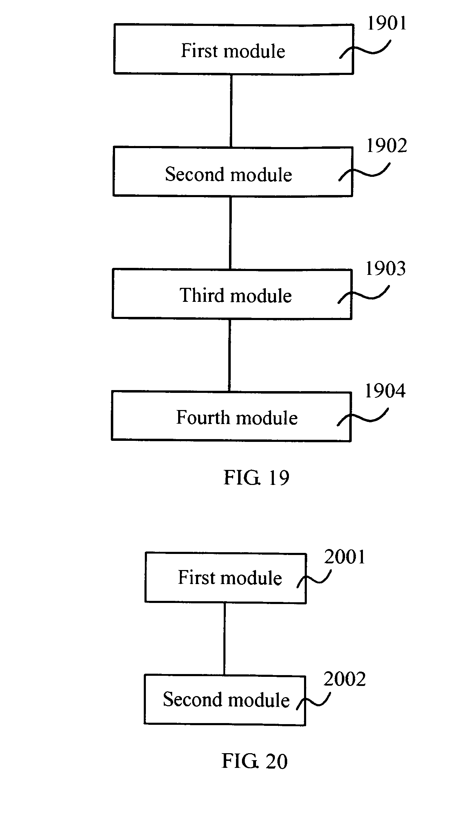

FIG. 19 is a schematic structural view of another device for establishing a multi-user service according to a further embodiment of the present invention. In an embodiment, the present invention provides a device for establishing a multi-user service. As shown in FIG. 19, the device includes a first module 1901, a second module 1902, a third module 1903, and a fourth module 1904.

The first module 1901 is configured to initiate a third-party call.

The second module 1902 is configured to receive a media control channel parameter and a media transmission channel parameter returned by an MF and receive a media transmission channel parameter of a receiving-party user unit.

The third module 1903 is configured to associate a media control channel parameter of a controlling-party user unit with the media transmission channel parameter of the receiving-party user unit, and send an associated parameter to the MF.

The fourth module 1904 is configured to establish a media control channel with the MF.

In the embodiment, the third-party call is initiated through the first module, a relevant parameter is received through the second module, and after the relevant parameter is associated through the third module, the media control channel is established through the fourth module. Through the device, a purpose that the receiving-party user unit can synchronously watch the media content is achieved, and the controlling-party user unit synchronously operates media playing through the MF, so as to overcome the disadvantage of being incapable of realizing synchronous watching and synchronous control in the prior art, thus improving the user experience, and enriching functions of the service.

FIG. 20 is a schematic structural view of another device for transferring a control channel according to a further embodiment of the present invention. In an embodiment, the present invention provides a device for transferring a control channel. As shown in FIG. 20, the device includes a first module 2001 and a second module 2002.

The first module 2001 is configured to send a media control channel transfer request to notify transfer of the control channel.

The second module 2002 is configured to release a media control channel established with an MF.

In the embodiment, the media control channel transfer request is sent through the first module, and the media control channel is released through the second module, so as to enable other user units to establish the media control channel. The device guarantees stability and security of the transfer procedure of the media control channel, thus overcoming the disadvantage of being incapable of transferring the media control channel in the prior art, improving the user experience, and enriching the service function.

Persons of ordinary skill in the art may understand that all or part of the steps of the method according to the embodiments of the present invention may be implemented by a program instructing relevant hardware. The program may be stored in a computer readable storage medium. When the program runs, the steps of the method according to the embodiments of the present invention are performed. The storage medium may be any medium that is capable of storing program codes, such as a Read-Only Memory (ROM), a Random Access Memory (RAM), a magnetic disk, or a Compact Disk Read-Only Memory (CD-ROM).

It should be noted that the above embodiments are merely provided for elaborating the technical solutions of the present invention, but not intended to limit the present invention. Although the present invention has been described in detail with reference to the foregoing embodiments, it is apparent that persons with ordinary skill in the art may make modifications to the technical solutions described in the above embodiments, or may make some equivalent replacements to some of the technical properties without making the nature of the corresponding technical solutions depart from the scope of the various embodiments of the present invention.

## Claims

1. A method for establishing a multi-user service, comprising:
sending (202), by a session control function unit, a media session establishing request to a media function unit according to a session establishment notification received from a controlling-party user unit;
receiving (203), by the session control function unit, a media control channel parameter and a media transmission channel parameter returned by the media function unit, and sending (204, 206) the parameters to the controlling-party user unit and a receiving-party user unit;
receiving (205, 207), by the session control function unit, the media control channel parameter of the controlling-party user unit and the media transmission channel parameter of the receiving-party user unit;
associating, by the session control function unit, the media control channel parameter of the controlling-party user unit with the media transmission channel parameter of the receiving-party user unit and generating an associated parameter;
sending (208), by the session control function unit, the associated parameter to the media function unit;
establishing (209), by the media function unit, a media control channel with the controlling-party user unit according to the associated parameter; and
establishing (210), by the media function unit, a media transmission channel with the receiving-party user unit according to the associated parameter.

2. The method according to claim 1, further comprising:
receiving, by a conference function unit, a conference establishing request of the controlling-party user unit and returning a conference identifier;
establishing, by the conference function unit, the media transmission channel with the controlling-party user unit; and
sending, by the conference function unit, the media session establishing request to a service control function unit according to the conference establishing request, and forwarding, by the service control function unit, the media session establishing request to a media function unit.

3. The method according to claim 1, further comprising:
receiving, by a session control function unit, a media control channel transfer notification of the controlling-party user unit;
sending, by the session control function unit, a media session establishing request to the precontrolling-party user unit, and receiving a returned media control channel parameter;
sending, by the session control function unit, the media function unit a media session modifying request including the media control channel parameter of the precontrolling party and a session identifier of the current media control channel; and
establishing, by the media function unit, a media control channel with the precontrolling-party user unit, and releasing the media control channel established with the controlling-party user unit.

4. The method according to claim 3, wherein during the establishing the media control channel with the precontrolling-party user unit, control state information of the media control channel to be transferred is sent to the precontrolling-party user unit.

5. The method according to claim 3, wherein the establishing the media control channel with the precontrolling-party user unit and releasing the media control channel established with the controlling-party user unit comprise:
sending, by the media function unit, a media control channel parameter and a media control channel state of the media function unit to a session control function unit;
forwarding, by the session control function unit, the media control channel parameter and the media control channel state of the media function unit to the precontrolling-party user unit, and sending a media session ending request to the controlling-party user unit;
receiving, by the session control function unit, a response of the controlling-party user unit, and sending a response acknowledgement to the media function unit; and
establishing, by the media function unit, the media control channel with the precontrolling-party user unit and releasing the media control channel established with the controlling-party user unit according to the received response acknowledgement.

6. The method according to claim 2, further comprising:
receiving, by the conference function unit, a media control channel transfer request of a precontrolling-party user unit;
authorizing, by the conference function unit, the precontrolling-party user unit and sending a session modifying request;
receiving, by the conference function unit, a media control channel parameter of the precontrolling-party user unit, and forwarding the media control channel parameter to the service control function unit; and
sending, by the service control function unit, the media control channel parameter of the precontrolling-party user unit to a media function unit.

7. The method according to claim 3, wherein the establishing the media control channel with the precontrolling-party user unit and releasing the media control channel established with the controlling-party user unit comprise:
receiving, by a service control function unit, a media control channel parameter and a media control channel state of a media function unit and sending the media control channel parameter and the media control channel state to a conference function unit;
sending, by the conference function unit, the media control channel parameter and the media control channel state of the media function unit to the precontrolling-party user unit;
sending, by the conference function unit, a conference session modifying request to the controlling-party user unit, receiving a request response of the controlling-party user unit, and sending a response acknowledgement to the service control function unit;
sending, by the service control function unit, the response acknowledgement to the media function unit; and
according to the response acknowledgement, establishing, by the media function unit, the media control channel with the precontrolling-party user unit, and releasing, by the media function unit, the media control channel established with the controlling-party user unit.

8. A system for establishing a multi-user service, comprising:
a session control function unit (1402), configured to send a media session establishing request to a media function unit according to a session establishment notification received from a controlling-party user unit, receive a media control channel parameter and a media transmission channel parameter returned by the media function unit and send the parameters to the controlling-party user unit and a receiving-party user unit, receive the media control channel parameter of the controlling-party user unit and the media transmission channel parameter of the receiving-party user unit, associate the media control channel parameter of the controlling-party user unit with the media transmission channel parameter of the receiving-party user unit and generating an associated parameter, and send the associated parameter to the media function unit; and
the media function unit (1401), configured to return the media control channel parameter and the media transmission channel parameter according to the received media session establishing request, receive the associated parameter, establish a media control channel with the controlling-party user unit according to the associated parameter, and establish a media transmission channel with the receiving-party user unit according to the associated parameter.

9. The system according to claim 8, wherein:
the session control function unit (1402) is further configured to receive a media control channel transfer notification of the controlling-party user unit, send a media session establishing request to the precontrolling-party user unit, receive a returned media control channel parameter, and send the media function unit a media session modifying request including the media control channel parameter of the precontrolling party and a session identifier of the current media control channel; and
the media function unit is further configured to establish a media control channel with the precontrolling-party user unit and release the media control channel established with the controlling-party user unit.

10. The system according to claim 9, wherein the session control function unit comprises a conference function unit and a service control function unit,
the conference function unit is configured to receive the media control channel transfer request of the precontrolling-party user unit, authorize the precontrolling-party user unit and send a session modifying request, receive a media control channel parameter of the precontrolling-party user unit, and forward the media control channel parameter to the service control function unit, and
the service control function unit is configured to send the media control channel parameter of the precontrolling-party user unit to the media function unit.

## Patentansprüche

1. Verfahren zum Herstellen eines Mehrbenutzerdienstes, umfassend:
Senden (202) einer Mediensitzungs-Herstellungsanforderung zu einer Medienfunktionseinheit durch eine Sitzungssteuerungs-Funktionseinheit gemäß einer von einer Benutzereinheit des steuernden Teilnehmers empfangenen Sitzungsherstellungsbenachrichtigung;
Empfangen (203) eines Mediensteuerungskanalparameters und eines Medienübertragungskanalparameters, die durch die Medienfunktionseinheit zurückgegeben werden, durch die Sitzungssteuerungs-Funktionseinheit und Senden (204, 206) der Parameter zu der Benutzereinheit des steuernden Teilnehmers und einer Benutzereinheit des empfangenden Teilnehmers;
Empfangen (205, 207) des Mediensteuerungskanalparameters der Benutzereinheit des steuernden Teilnehmers und des Medienübertragungskanalparameters der Benutzereinheit des empfangenden Teilnehmers durch die Sitzungssteuerungs-Funktionseinheit;
Assoziieren des Mediensteuerungskanalparameters der Benutzereinheit des steuernden Teilnehmers mit dem Medienübertragungskanalparameter der Benutzereinheit des empfangenden Teilnehmers durch die Sitzungssteuerungs-Funktionseinheit und Erzeugen eines assoziierten Parameters;
Senden (208) des assoziierten Parameters zu der Medienfunktionseinheit durch die Sitzungssteuerungs-Funktionseinheit;
Herstellen (209) eines Mediensteuerkanals mit der Benutzereinheit des steuernden Teilnehmers durch die Medienfunktionseinheit gemäß dem assoziierten Parameter; und
Herstellen (210) eines Medienübertragungskanals mit der Benutzereinheit des empfangenen Teilnehmers durch die Medienfunktionseinheit gemäß dem assoziierten Parameter.

2. Verfahren nach Anspruch 1, ferner umfassend:
Empfangen einer Konferenzherstellungsanforderung der Benutzereinheit des steuernden Teilnehmers durch eine Konferenzfunktionseinheit und Zurückgeben einer Konferenzkennung;
Herstellen des Medienübertragungskanals mit der Benutzereinheit des steuernden Teilnehmers durch die Konferenzfunktionseinheit; und
Senden der Mediensitzungs-Herstellungsanforderung zu einer Dienststeuerungs-Funktionseinheit durch die Konferenzfunktionseinheit gemäß der Konferenzherstellungsanforderung und Weiterleiten der Mediensitzungs-Herstellungsanforderung zu einer Medienfunktionseinheit durch die Dienststeuerungs-Funktionseinheit.

3. Verfahren nach Anspruch 1, ferner umfassend:
Empfangen einer Mediensteuerungskanal-Transferbenachrichtigung der Benutzereinheit des steuernden Teilnehmers durch eine Sitzungssteuerungs-Funktionseinheit;
Senden einer Mediensitzungs-Herstellungsanforderung zu der Benutzereinheit des vorsteuernden Teilnehmers durch die Sitzungssteuerungs-Funktionseinheit und Empfangen eines zurückgegebenen Mediensteuerungskanalparameters;
Senden einer Mediensitzungs-Modifikationsanforderung, die den Mediensteuerungskanalparameter des vorsteuernden Teilnehmers und eine Sitzungskennung des aktuellen Mediensteuerungskanals umfasst, durch die Sitzungssteuerungs-Funktionseinheit an die Medienfunktionseinheit; und
Herstellen eines Mediensteuerungskanals mit der Benutzereinheit des vorsteuernden Teilnehmers durch die Medienfunktionseinheit und Freigeben des mit der Benutzereinheit des steuernden Teilnehmers hergestellten Mediensteuerungskanals.

4. Verfahren nach Anspruch 3, wobei während des Herstellens des Mediensteuerungskanals mit der Benutzereinheit des vorsteuernden Teilnehmers Steuerungszustandsinformationen des zu transferierenden Mediensteuerungskanals zu der Benutzereinheit des vorsteuernden Teilnehmers gesendet werden.

5. Verfahren nach Anspruch 3, wobei das Herstellen des Mediensteuerungskanals mit der Benutzereinheit des vorsteuernden Teilnehmers und das Freigeben des mit der Benutzereinheit des steuernden Teilnehmers hergestellten Mediensteuerungskanals Folgendes umfasst:
Senden eines Mediensteuerungskanalparameters und eines Mediensteuerungskanalzustands der Medienfunktionseinheit zu einer Sitzungssteuerungs-Funktionseinheit durch die Medienfunktionseinheit;
Weiterleiten des Mediensteuerungskanalparameters und des Mediensteuerungskanalzustands der Medienfunktionseinheit zu der Benutzereinheit des vorsteuerenden Teilnehmers durch die Sitzungssteuerungs-Funktionseinheit und Senden einer Mediensitzungs-Beendigungsanforderung zu der Benutzereinheit des steuernden Teilnehmers;
Empfangen einer Antwort der Benutzereinheit des steuernden Teilnehmers durch die Sitzungssteuerungs-Funktionseinheit und Senden einer Antwortbestätigung zu der Medienfunktionseinheit; und
Herstellen des Mediensteuerungskanals mit der Benutzereinheit des vorsteuernden Teilnehmers durch die Medienfunktionseinheit und Freigeben des mit der Benutzereinheit des steuernden Teilnehmers hergestellten Mediensteuerungskanals gemäß der empfangenen Antwortbestätigung.

6. Verfahren nach Anspruch 2, ferner umfassend:
Empfangen einer Mediensteuerungskanal-Transferanforderung einer Benutzereinheit des vorsteuernden Teilnehmers durch die Konferenzfunktionseinheit;
Autorisieren der Benutzereinheit des vorsteuernden Teilnehmers durch die Konferenzfunktionseinheit und Senden einer Sitzungsmodifikationsanforderung;
Empfangen eines Mediensteuerungskanalparameters der Benutzereinheit des vorsteuernden Teilnehmers durch die Konferenzfunktionseinheit und Weiterleiten des Mediensteuerungskanalparameters zu der Dienststeuerungs-Funktionseinheit; und
Senden des Mediensteuerungskanalparameters der Benutzereinheit des vorsteuernden Teilnehmers zu einer Medienfunktionseinheit durch die Dienststeuerungs-Funktionseinheit.

7. Verfahren nach Anspruch 3, wobei das Herstellen des Mediensteuerungskanals mit der Benutzereinheit des vorsteuernden Teilnehmers und das Freigeben des mit der Benutzereinheit des steuernden Teilnehmers hergestellten Mediensteuerungskanals Folgendes umfasst:
Empfangen eines Mediensteuerungskanalparameters und eines Mediensteuerungskanalzustands einer Medienfunktionseinheit durch eine Dienststeuerungs-Funktionseinheit und Senden des Mediensteuerungskanalparameters und des Mediensteuerungskanalzustands zu einer Konferenzfunktionseinheit;
Senden des Mediensteuerungskanalparameters und des Mediensteuerungskanalzustands der Medienfunktionseinheit zu der Benutzereinheit des vorsteuernden Teilnehmers durch die Konferenzfunktionseinheit;
Senden einer Konferenzsitzungs-Modifikationsanforderung zu der Benutzereinheit des steuernden Teilnehmers durch die Konferenzfunktionseinheit, Empfangen einer Anforderungsantwort der Benutzereinheit des steuernden Teilnehmers und Senden einer Antwortbestätigung zu der Dienststeuerungs-Funktionseinheit;
Senden der Antwortbestätigung zu der Medienfunktionseinheit durch die Dienststeuerungs-Funktionseinheit; und
gemäß der Antwortbestätigung, Herstellen des Mediensteuerungskanals mit der Benutzereinheit des vorsteuernden Teilnehmers durch die Medienfunktionseinheit und Freigeben des mit der Benutzereinheit des steuernden Teilnehmers hergestellten Mediensteuerungskanals durch die Medienfunktionseinheit.

8. System zum Herstellen eines Mehrbenutzerdienstes, umfassend:
eine Sitzungssteuerungs-Funktionseinheit (1402), ausgelegt zum Senden einer Mediensitzungs-Herstellungsanforderung zu einer Medienfunktionseinheit gemäß einer von einer Benutzereinheit des steuernden Teilnehmers empfangenen Sitzungsherstellungsbenachrichtigung, Empfangen eines Mediensteuerungskanalparameters und eines Medienübertragungskanalparameters, die durch die Medienfunktionseinheit zurückgegeben werden, und Senden der Parameter zu der Benutzereinheit des steuernden Teilnehmers und einer Benutzereinheit des empfangenden Teilnehmers, Empfangen des Mediensteuerungskanalparameters der Benutzereinheit des steuernden Teilnehmers und des Medienübertragungskanalparameters der Benutzereinheit des empfangenden Teilnehmers, Assoziieren des Mediensteuerungskanalparameters der Benutzereinheit des steuernden Teilnehmers mit dem Medienübertragungskanalparameter der Benutzereinheit des empfangenden Teilnehmers und Erzeugen eines assoziierten Parameters und Senden des assoziierten Parameters zu der Medienfunktionseinheit; und
die Medienfunktionseinheit (1401), ausgelegt zum Zurückgeben des Mediensteuerungskanalparameters und des Medienübertragungskanalparameters gemäß der empfangenen Mediensitzungs-Herstellungsanforderung, Empfangen des assoziierten Parameters, Herstellen eines Mediensteuerungskanals mit der Benutzereinheit des steuernden Teilnehmers gemäß dem assoziierten Parameter und Herstellen eines Medienübertragungskanals mit der Benutzereinheit des empfangenden Teilnehmers gemäß dem assoziierten Parameter.

9. System nach Anspruch 8, wobei
die Sitzungssteuerungs-Funktionseinheit (1402) ferner ausgelegt ist zum Empfangen einer Mediensteuerungskanal-Transferbenachrichtigung der Benutzereinheit des steuernden Teilnehmers, Senden einer Mediensitzungs-Herstellungsanforderung zu der Benutzereinheit des vorsteuernden Teilnehmers, Empfangen eines zurückgegebenen Mediensteuerungskanalparameters und Senden einer Mediensitzungs-Modifikationsanforderung, die den Mediensteuerungskanalparameter des vorsteuernden Teilnehmers und eine Sitzungskennung des aktuellen Mediensteuerungskanals umfasst, an die Medienfunktionseinheit; und
die Medienfunktionseinheit ferner ausgelegt ist zum Herstellen eines Mediensteuerkanals mit der Benutzereinheit des vorsteuernden Teilnehmers und Freigeben des mit der Benutzereinheit des steuernden Teilnehmers hergestellten Mediensteuerungskanals.

10. System nach Anspruch 9, wobei die Sitzungssteuerungs-Funktionseinheit eine Konferenzfunktionseinheit und eine Dienststeuerungs-Funktionseinheit umfasst,
die Konferenzfunktionseinheit ausgelegt ist zum Empfangen der Mediensteuerungs-kanal-Transferanforderung der Benutzereinheit des vorsteuernden Teilnehmers, Autorisieren der Benutzereinheit des vorsteuernden Teilnehmers und Senden einer Sitzungsmodifikationsanforderung, Empfangen eines Mediensteuerungskanalparameters der Benutzereinheit des vorsteuernden Teilnehmers und Weiterleiten des Mediensteuerungskanalparameters zu der Dienststeuerungs-Funktionseinheit und
die Dienststeuerungs-Funktionseinheit ausgelegt ist zum Senden des Mediensteuerungskanalparameters der Benutzereinheit des vorsteuernden Teilnehmers zu der Medienfunktionseinheit.

## Revendications

1. Procédé d'établissement d'un service multi-utilisateurs, comprenant :
l'envoi (202), par une unité à fonction de commande de session, d'une demande d'établissement de session multimédia à une unité à fonction multimédia conformément à une notification d'établissement de session reçue d'une unité utilisatrice constituant une entité de commande ;
la réception (203), par l'unité à fonction de commande de session, d'un paramètre de canal de commande multimédia et d'un paramètre de canal de transmission multimédia renvoyés par l'unité à fonction multimédia, et l'envoi (204, 206) des paramètres à l'unité utilisatrice constituant une entité de commande et à une unité utilisatrice constituant une entité réceptrice ;
la réception (205, 207), par l'unité à fonction de commande de session, du paramètre de canal de commande multimédia de l'unité utilisatrice constituant une entité de commande et du paramètre de canal de transmission multimédia de l'unité utilisatrice constituant une entité réceptrice ;
l'association, par l'unité à fonction de commande de session, du paramètre de canal de commande multimédia de l'unité utilisatrice constituant une entité de commande au paramètre de canal de transmission multimédia de l'unité utilisatrice constituant une entité réceptrice et la génération d'un paramètre associé ;
l'envoi (208), par l'unité à fonction de commande de session, du paramètre associé à l'unité à fonction multimédia ;
l'établissement (209), par l'unité à fonction multimédia, d'un canal de commande multimédia avec l'unité utilisatrice constituant une entité de commande conformément au paramètre associé ; et
l'établissement (210), par l'unité à fonction multimédia, d'un canal de transmission multimédia avec l'unité utilisatrice constituant une entité réceptrice conformément au paramètre associé.

2. Procédé selon la revendication 1, comprenant en outre :
la réception, par une unité à fonction de conférence, d'une demande d'établissement de conférence de l'unité utilisatrice constituant une entité de commande et le renvoi d'un identifiant de conférence ;
l'établissement, par l'unité à fonction de conférence, du canal de transmission multimédia avec l'unité utilisatrice constituant une entité de commande ; et
l'envoi, par l'unité à fonction de conférence, de la demande d'établissement de session multimédia à une unité à fonction de commande de service conformément à la demande d'établissement de conférence, et le réacheminement, par l'unité à fonction de commande de service, de la demande d'établissement de session multimédia à une unité à fonction multimédia.

3. Procédé selon la revendication 1, comprenant en outre :
la réception, par une unité à fonction de commande de session, d'une notification de transfert de canal de commande multimédia de l'unité utilisatrice constituant une entité de commande ;
l'envoi, par l'unité à fonction de commande de session, d'une demande d'établissement de session multimédia à l'unité utilisatrice constituant une entité de précommande, et la réception d'un paramètre de canal de commande multimédia renvoyé ;
l'envoi, par l'unité à fonction de commande de session, à l'unité à fonction multimédia, d'une demande de modification de session multimédia comprenant le paramètre de canal de commande multimédia de l'entité de précommande et un identifiant de session du canal de commande multimédia en cours ; et
l'établissement, par l'unité à fonction multimédia, d'un canal de commande multimédia avec l'unité utilisatrice constituant une entité de précommande, et la libération du canal de commande multimédia établi avec l'unité utilisatrice constituant une entité de commande.

4. Procédé selon la revendication 3, dans lequel, pendant l'établissement du canal de commande multimédia avec l'unité utilisatrice constituant une entité de précommande, des informations d'état de commande du canal de commande multimédia devant être transférées sont envoyées à l'unité utilisatrice constituant une entité de précommande.

5. Procédé selon la revendication 3, dans lequel l'établissement du canal de commande multimédia avec l'unité utilisatrice constituant une entité de précommande et la libération du canal de commande multimédia établi avec l'unité utilisatrice constituant une entité de commande comprennent :
l'envoi, par l'unité à fonction multimédia, d'un paramètre de canal de commande multimédia et d'un état de canal de commande multimédia de l'unité à fonction multimédia à une unité à fonction de commande de session ;
le réacheminement, par l'unité à fonction de commande de session, du paramètre de canal de commande multimédia et de l'état de canal de commande multimédia de l'unité à fonction multimédia à l'unité utilisatrice constituant une entité de précommande, et l'envoi d'une demande de fin de session multimédia à l'unité utilisatrice constituant une entité de commande ;
la réception, par l'unité à fonction de commande de session, d'une réponse de l'unité utilisatrice constituant une entité de commande, et l'envoi d'un accusé de réception de réponse à l'unité à fonction multimédia ; et
l'établissement, par l'unité à fonction multimédia, du canal de commande multimédia avec l'unité utilisatrice constituant une entité de précommande, et la libération du canal de commande multimédia établi avec l'unité utilisatrice constituant une entité de commande conformément à l'accusé de réception de réponse reçu.

6. Procédé selon la revendication 2, comprenant en outre :
la réception, par l'unité à fonction de conférence, d'une demande de transfert de canal de commande multimédia d'une unité utilisatrice constituant une entité de précommande ;
l'autorisation, par l'unité à fonction de conférence, de l'unité utilisatrice constituant une entité de précommande et l'envoi d'une demande de modification de session ;
la réception, par l'unité à fonction de conférence, d'un paramètre de canal de commande multimédia de l'unité utilisatrice constituant une entité de précommande,
et le réacheminement du paramètre de canal de commande multimédia à l'unité à fonction de commande de service ; et
l'envoi, par l'unité à fonction de commande de service, du paramètre de canal de commande multimédia de l'unité utilisatrice constituant une entité de précommande à une unité à fonction multimédia.

7. Procédé selon la revendication 3, dans lequel l'établissement du canal de commande multimédia avec l'unité utilisatrice constituant une entité de précommande et la libération du canal de commande multimédia établi avec l'unité utilisatrice constituant une entité de commande comprennent :
la réception, par une unité à fonction de commande de service, d'un paramètre de canal de commande multimédia et d'un état de canal de commande multimédia d'une unité à fonction multimédia et l'envoi du paramètre de canal de commande multimédia et de l'état de canal de commande multimédia à une unité à fonction de conférence ;
l'envoi, par l'unité à fonction de conférence, du paramètre de canal de commande multimédia et de l'état de canal de commande multimédia de l'unité à fonction multimédia à l'unité utilisatrice constituant une entité de précommande ;
l'envoi, par l'unité à fonction de conférence, d'une demande de modification de session de conférence à l'unité utilisatrice constituant une entité de commande, la réception d'une réponse à la demande de l'unité utilisatrice constituant une entité de commande, et l'envoi d'un accusé de réception de réponse à l'unité à fonction de commande de service ;
l'envoi, par l'unité à fonction de commande de service, de l'accusé de réception de réponse à l'unité à fonction multimédia ; et
conformément à l'accusé de réception de réponse, l'établissement, par l'unité à fonction multimédia, du canal de commande multimédia avec l'unité utilisatrice constituant une entité de précommande, et la libération, par l'unité à fonction multimédia, du canal de commande multimédia établi avec l'unité utilisatrice constituant une entité de commande.

8. Système d'établissement d'un service multi-utilisateurs, comprenant :
une unité à fonction de commande de session (1402), configurée pour envoyer une demande d'établissement de session multimédia à une unité à fonction multimédia conformément à une notification d'établissement de session reçue d'une unité utilisatrice constituant une entité de commande, recevoir un paramètre de canal de commande multimédia et un paramètre de canal de transmission multimédia renvoyés par l'unité à fonction multimédia et envoyer les paramètres à l'unité utilisatrice constituant une entité de commande et à une unité utilisatrice constituant une entité réceptrice, recevoir le paramètre de canal de commande multimédia de l'unité utilisatrice constituant une entité de commande et le paramètre de canal de transmission multimédia de l'unité utilisatrice constituant une entité réceptrice, associer le paramètre de canal de commande multimédia de l'unité utilisatrice constituant une entité de commande au paramètre de canal de transmission multimédia de l'unité utilisatrice constituant une entité réceptrice et générer un paramètre associé, et envoyer le paramètre associé à l'unité à fonction multimédia ; et
l'unité à fonction multimédia (1401), configurée pour renvoyer le paramètre de canal de commande multimédia et le paramètre de canal de transmission multimédia conformément à la demande d'établissement de session multimédia reçue, recevoir le paramètre associé, établir un canal de commande multimédia avec l'unité utilisatrice constituant une entité de commande conformément au paramètre associé, et établir un canal de transmission multimédia avec l'unité utilisatrice constituant une entité réceptrice conformément au paramètre associé.

9. Système selon la revendication 8, dans lequel :
l'unité à fonction de commande de session (1402) est en outre configurée pour recevoir une notification de transfert de canal de commande multimédia de l'unité utilisatrice constituant une entité de commande, envoyer une demande d'établissement de session multimédia à l'unité utilisatrice constituant une entité de précommande, recevoir un paramètre de canal de commande multimédia renvoyé, et envoyer à l'unité à fonction multimédia une demande de modification de session multimédia comprenant le paramètre de canal de commande multimédia de l'entité de précommande et un identifiant de session du canal de commande multimédia en cours ; et
l'unité à fonction multimédia est en outre configurée pour établir un canal de commande multimédia avec l'unité utilisatrice constituant une entité de précommande, et libérer le canal de commande multimédia établi avec l'unité utilisatrice constituant une entité de commande.

10. Système selon la revendication 9, dans lequel l'unité à fonction de commande de session comprend une unité à fonction de conférence et une unité à fonction de commande de service,
l'unité à fonction de conférence est configurée pour recevoir la demande de transfert de canal de commande multimédia de l'unité utilisatrice constituant une entité de précommande, autoriser l'unité utilisatrice constituant une entité de précommande et envoyer une demande de modification de session, recevoir un paramètre de canal de commande multimédia de l'unité utilisatrice constituant une entité de précommande, et réacheminer le paramètre de canal de commande multimédia à l'unité à fonction de commande de service, et
l'unité à fonction de commande de service est configurée pour envoyer le paramètre de canal de commande multimédia de l'unité utilisatrice constituant une entité de précommande à l'unité à fonction multimédia.
